# EUROPEAN PATENT APPLICATION

(11) **EP 0 675 649 A2**
(43) Date of publication of application: **04.10.1995**
(21) Application number: 95302170.6
(22) Date of filing: 31.03.1995
(51) Int. Cl.: H04N 5/926, H04N 9/804

(54) **Method and apparatus for recording or reproducing digital picture image signal**

(30) Priority: 01.04.1994 JP 65298/94
(71) Applicant: KABUSHIKI KAISHA TOSHIBA, Kawasaki-shi, Kanagawa-ken 210 (JP)
(72) Inventor: Sakazaki, Yoshihisa, c/o Toshiba Corporation, Minato-ku, Tokyo (JP); Nagoya, Tetsuo, c/o Toshiba Corporation, Minato-ku, Tokyo (JP); Shimoda, Kenji, c/o Toshiba Corporation, Minato-ku, Tokyo (JP); Nagashima, Akira, c/o Toshiba Corporation, Minato-ku, Tokyo (JP)
(74) Representative: O'Connell, David Christopher

(57) **Abstract**

A digital picture image signal recording method, in which by sequentially forming tracks (15) on a tape recording medium (14) running at a prescribed speed oblique to its running direction digital picture image signals compressed by a high efficiency encoding technique are recorded using rotary heads (12,13) and at the same time, and then plural kinds of tracking pilot signals (F₀,F₁,F₂) with different frequencies on adjacent tracks are recorded, the method comprises the steps of deriving data which are essential to decoding the recorded digital picture image signals from the high efficiency encoded digital signals, successively establishing record areas in unit of a number of tracks equivalent to a cycle period of the tracking pilot signals that can be distinguished by the pilot signal as one group, and recording data which are essential to the decoding in the recording areas.

## Description

The present invention relates to a method and an apparatus for recording or reproducing digital picture image signals which have been compressed by a high efficiency encoding technique.

A digital recording of picture image data has been greatly progressed and put in practical use in recent years.

In the digital recording of picture image data, if images are directly digitized, amount of information is too much and much running costs are required for recording or reproducing the signals. In order to solve this problem, a high efficiency encoding technique utilizing the correlation as seen in the international standard system MPEG (Motion Picture Expert Group) is carried out.

However, when digital picture image data of which amount of information was reduced by this high efficiently encoding are recorded on a magnetic tape by a helical scanning type video tape recorder (VTR) equipped with rotary heads and the recorded data are reproduced at speeds differing from the recording speed while running the magnetic tape, that is, a so-called particular speed reproduction is performed, reproducing heads run across multiple tracks of the tape as the tape feeding speed is changed and picture image data are intermittently obtained. This does mean lack of the continuity of data and therefore, if data are recorded on a tape by the high efficiency encoding operation utilizing the correlation of the picture image data, the reproduction of data at variable speeds will become extremely difficult.

In order to overcome such a defect, a method to limit the number of speeds for the particular speed reproduction and arrange data for particular speed reproduction on tracks that are reproducible by reproducing heads in the particular speed reproduction has been known as a publicly well-known technique.

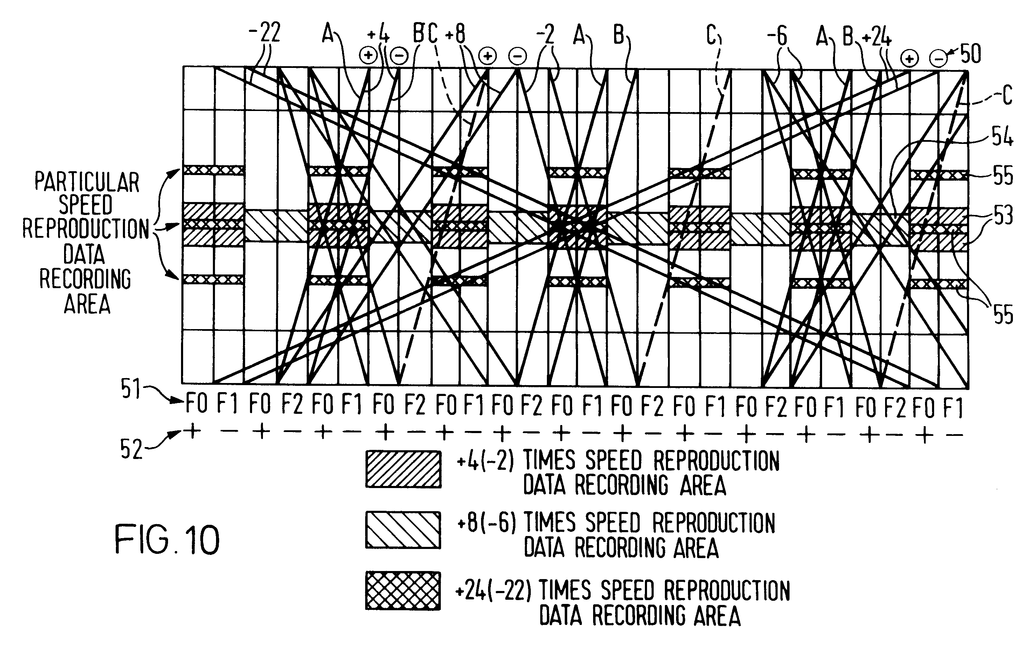

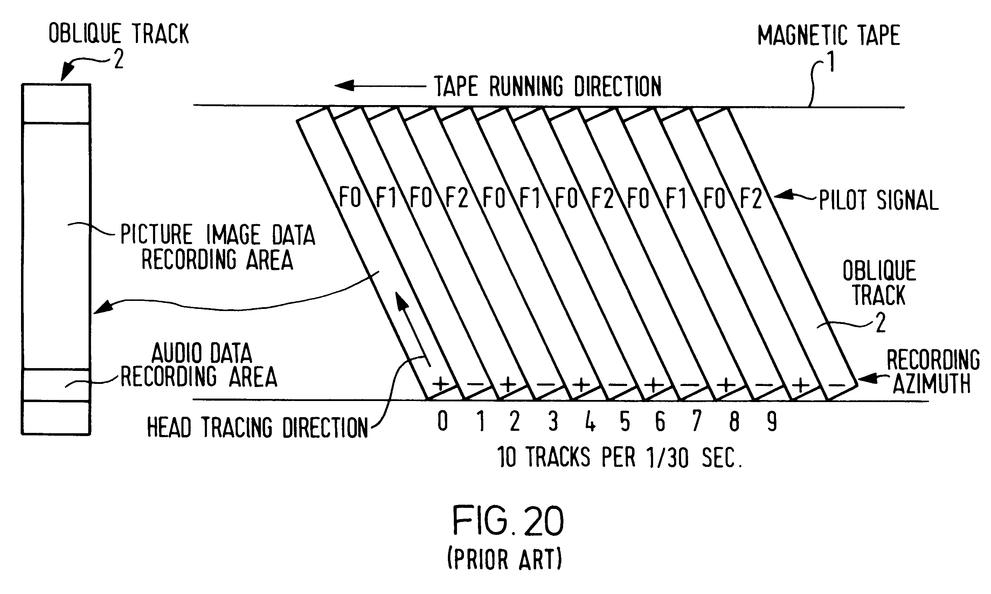

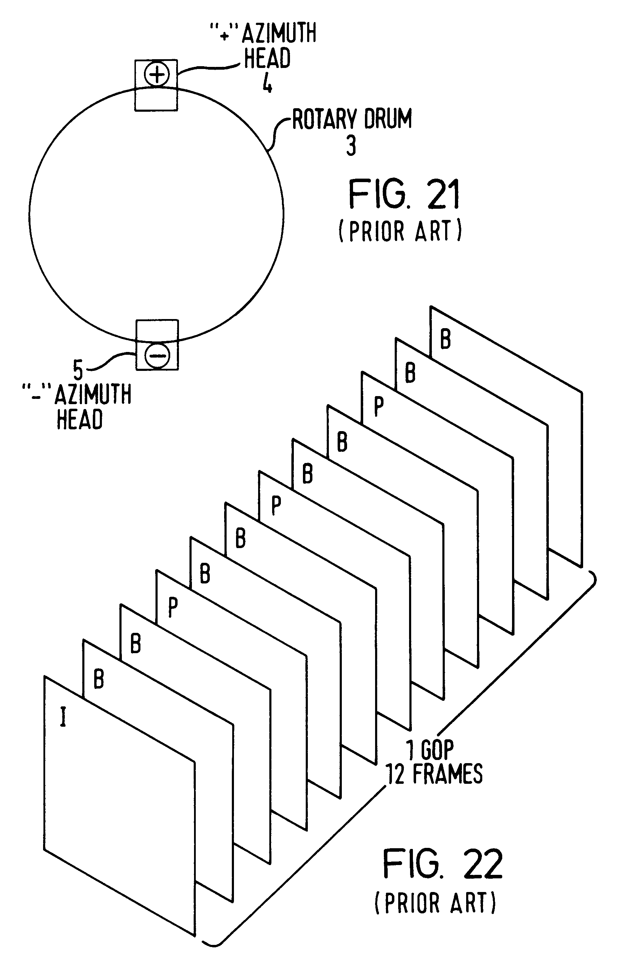

A tape format for a conventional civil use digital VTR is shown in FIGURE 20(a). Data are recorded or reproduced on or from oblique tracks 2 of a magnetic tape 1 using rotary heads shown in FIGURE 21. Further, pilot signals F1, F0 and F2 which are required for tracking are recorded on the tracks 2 in that order. The tracks 2 are formed so that adjacent tracks form an opposite azimuth and the pilot signals are recorded by superposing on picture image data and voice data to be recorded in the periods of 4 signals F0, F1, F0 and F2. Each of the tracks 2 is provided with a picture image data area and a voice data area as shown in FIGURE 20(b), 10 tracks are used per 1/30 sec, that is equivalent to a time of one frame.

The construction of the rotary head is shown in FIGURE 21. There are a "+" azimuth head 4 and a "-" azimuth head 5, which is in the 180° opposite direction to the head 4, on a rotary drum 3.

The construction of one GOP picture image data in the MPEG is shown in FIGURE 22, one GOP (Group of Picture in the MPEG) is comprised of 12 frames. Out of these frames, the I-frame is comprised of intra-frame encoded data only, the frame P is comprised of the intra-frame data and the inter-frame predictive encoded data from the preceding I-frame or the intra-frame and the inter-frame data from the preceding P-frame, and the frame B is comprised of the intra-frame and the preceding I-frame or the preceding P-frame and the inter-frame data from the succeeding I-frame or the succeeding P-frame.

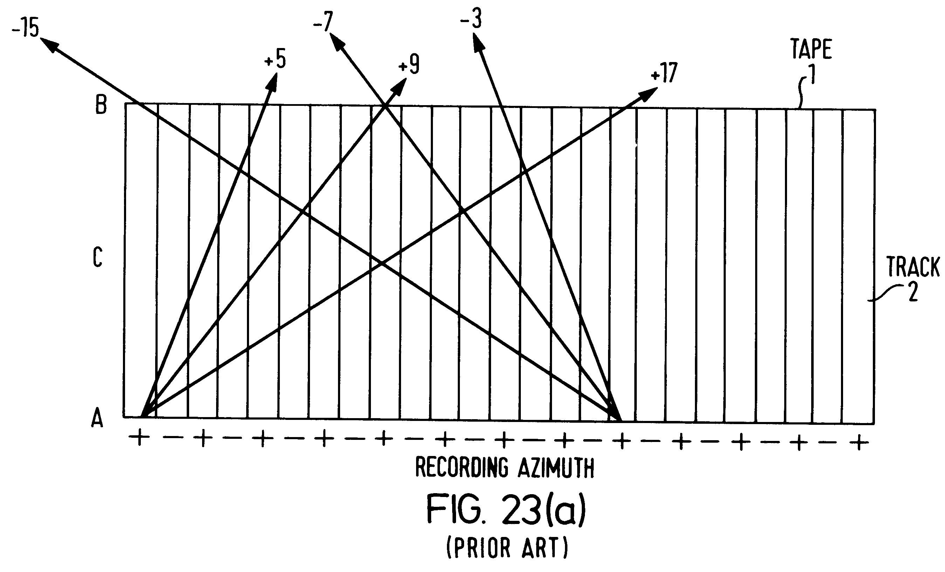

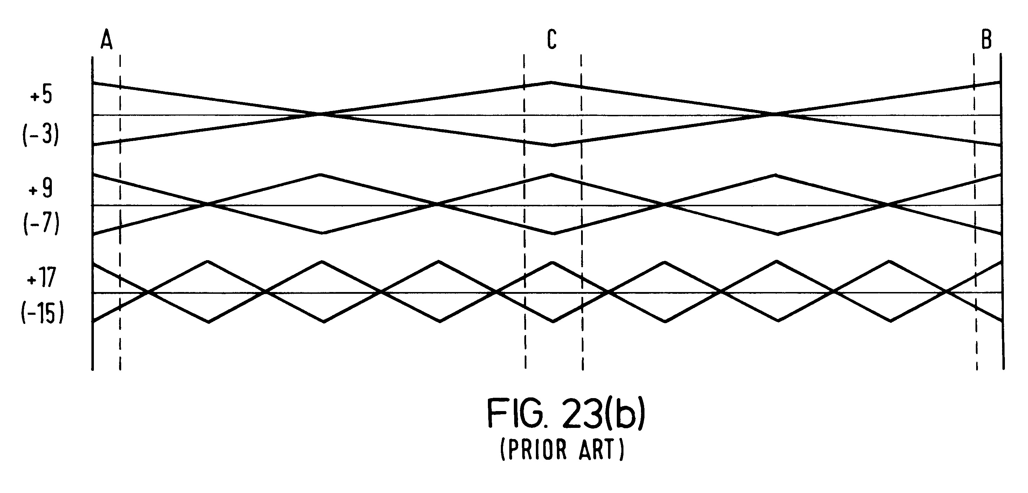

FIGURE 23(a) shows the relationship between the track pattern and the scanning loci of the rotary heads in the reproduction at +5(-3), +9(-7) and +17(-15) times speeds. Further, the symbol "+" indicates when a tape was run in the same direction as that at the recording, while the symbol "-" indicates when a tape was run in the direction reverse to that at the recording, and numerals show speed times. For the simplicity of explanation, the track pattern is shown by mapping the oblique tracks to vertical tracks with respect to the longitudinal direction of the tape, in the drawings used for following explanations. In FIGURE 23(b), envelopes of picture image data reproduced at the speeds shown in FIGURE 23(a) are shown. The envelopes shown in FIGURE 23(b) are the envelopes reproduced by the reproducing head having the "+" azimuth at respective speeds shown in FIGURE 23(a).

As shown in FIGURES 23(a) and 23(b), it is seen that picture image data can be reproduced at respective ends A and B and the center C of the track 2 commonly to all speed times described above.

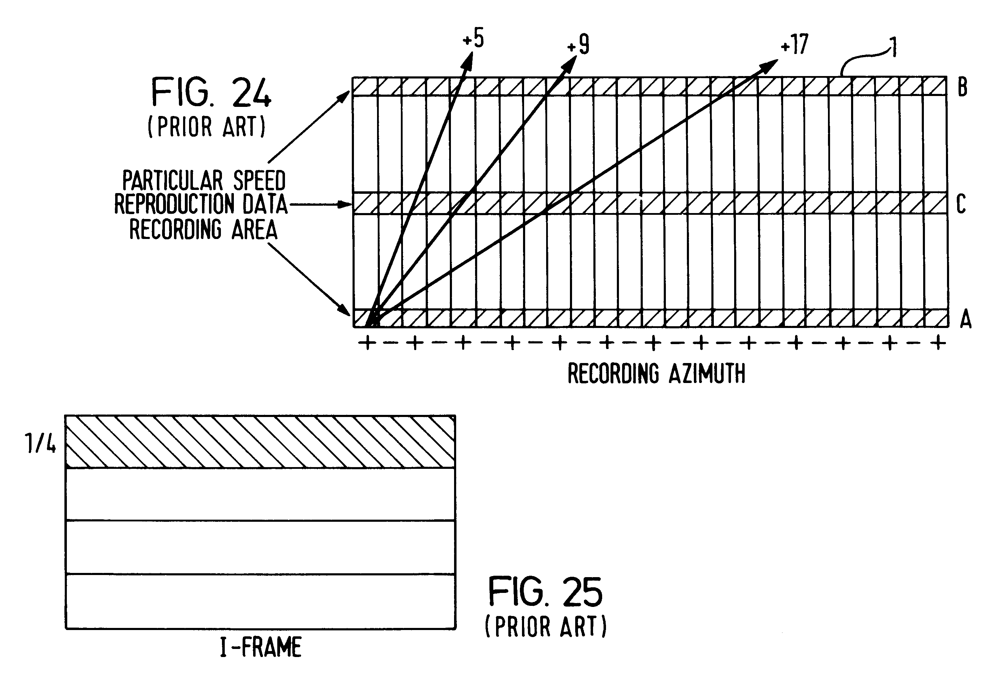

Accordingly, when data areas for the particular speed reproduction are provided on a magnetic tape, they are provided so far at respective ends A and B and the center C of the track 2 as a method to carry out the particular speed reproduction. In three particular speed reproduction data areas A, B and C within one track, particular speed reproduction data generated by low frequency components (DC and low frequency components) of DCT (Digital Cosine Transformation) of a frame equivalent to the upper 1/4 of the I-frame as shown in FIGURE 25 are recorded. Then, the same data as this are repetitively recorded over the adjacent 17 tracks. Even when picture image data become reproducible in any tracks in the particular speed reproduction by this repetitive recording, the continuity of data recorded in the particular speed reproduction data areas provided at the center and the respective ends of the tracks is maintained. Therefore, low frequency component data equivalent to the upper 1/4 of the next I-frame are recorded in the particular speed reproduction data areas of the next 17 tracks. Thus, it becomes possible to achieve the particular speed reproduction of picture image data recorded in the particular speed reproduction data areas by updating the I-frame by 1/4 at the +5(-3), +9(7) and +17(15) time speeds.

By the way, in a VTR which records or reproduces the high efficiency encoded picture image data as described above, for the particular speed reproduction, limited areas that are traceable by the reproducing heads at a low times speed as well as a high times speed are used and furthermore, the same particular speed reproduction data are used at any times speed, there was such a problem that deterioration in quality of video that was not conspicuous so far at a high times speed is presented very remarkably.

As described above, on a conventional digital VTR, there was such a problem that the deterioration in quality of video that was not conspicuous at a large number times speed was presented very remarkably at a small number times speed.

It is, therefore, an object of the present invention to provide a digital picture image signal recording or reproducing method and an apparatus which is capable of reducing the deterioration in quality of video remarkably presented at a small number times speed in a digital VTR for recording or reproducing the high efficiency encoded digital picture image signals and obtaining stabilized and high-quality particular speed reproduction picture images.

In order to achieve the above object, an invention as claimed in claim 1 is characterized in that in a digital picture image signal recording method, in which by sequentially forming tracks on a tape recording medium running at a prescribed speed oblique to its running direction digital picture image signals compressed by a high efficiency encoding technique are recorded using rotary heads and at the same time, and then plural kinds of tracking pilot signals with different frequencies on adjacent tracks are recorded, the method comprises the steps of deriving data which are essential to decoding the recorded digital picture image signals from the high efficiency encoded digital signals, successively establishing record areas in unit of a number of tracks equivalent to a cycle period of the tracking pilot signals that can be distinguished by the pilot signal as one group, and recording data which are essential to the decoding in the recording areas.

An invention as claimed in claim 2 is characterized in that in a digital picture image signal recording method, in which by sequentially forming tracks on a tape recording medium running at a prescribed speed oblique to its running direction digital picture image signals compressed by high efficiency encoding technique are recorded using rotary heads and at the same time, and then plural kinds of tracking pilot signals with different frequencies on adjacent tracks are recorded, the method comprises the steps of deriving data which are essential to decoding the recorded digital picture image signals from the high efficiency encoded digital signals, successively establishing record areas in unit of the maximum number of contiguous tracks that can be distinguished by the pilot signal as one group, and recording data which are essential to the decoding in the recording areas.

An invention as claimed in claim 3 is characterized in that in a digital picture image signal recording or reproducing method in which by sequentially forming tracks on a tape recording medium running at a prescribed speed oblique to its running direction digital picture image signals compressed by a high efficiency encoding technique are recorded using the rotary heads and at the same time, and then plural kinds of tracking pilot signals with different frequencies are recorded on adjacent tracks, the method comprises the steps of deriving data which are essential to decoding the recorded digital picture image signals from the high efficiency encoded digital signals, successively establishing recording areas in unit of a number of tracks equivalent to a cycle period of the tracking pilot signals that can be distinguished by the pilot signal as one group, recording data which are essential to the decoding in the recording areas, and reproducing the digital picture image signals recorded on the tape recording medium by the rotary heads while running the recording medium at a speed of a multiple of that number of tracks by making the number of tracks equivalent to a cycle period of the tracking pilot signals that can be distinguished by the pilot signal as one group.

An invention as claimed in claim 4 is characterized in that in a digital picture image signal recording or reproducing method in which by sequentially forming tracks on a tape recording medium running at a prescribed speed oblique to its running direction digital picture image signals compressed by a high efficiency encoding technique are recorded using the rotary heads and at the same time, and then plural kinds of tracking pilot signals with different frequencies are recorded on adjacent tracks, the method comprises the steps of deriving data which are essential to decoding the recorded digital picture image signals from the high efficiency encoded digital signals, successively establishing recording areas in unit of the maximum number of contiguous tracks that can be distinguished by the pilot signal as one group, recording data which are essential to the decoding in the recording areas, and reproducing the digital picture image signals recorded on the tape recording medium by the rotary heads while running the recording medium at a speed of a multiple of that number of tracks by making or the maximum number of contiguous tracks that can be distinguished by the pilot signal as one group.

An invention as claimed in claim 5 is characterized in that in a digital picture image signal recording or reproducing method as claimed in claim 2, the reproducing speed of the tape recording medium is set at a speed as defined by an equation; n = (k/2) × r, wherein n is a speed unit of a particular reproduction speed, k is a number of tracks in a prescribed cycle period and r is a number of cycle period, essential data to decoding the decoded digital picture image signals are derived at every reproducing speed, and at each track that is traced by the rotary heads at every reproducing speed, essential data to decoding are repetitively recorded in unit of tracks on the tracks between the tracks that are traced.

An invention as claimed in claim 6 is characterized in that in a digital picture image signal recording or reproducing method as claimed in claim 2, the reproducing speed of the tape recording medium is set at multiple speeds comprising a submultiple or a multiple of the number of unit tracks, essential data to decoding the recorded digital picture image signals are derived at every reproducing speed, and at each track that is traced by the rotary heads at every reproducing speed, essential data to decoding are repetitively recorded in unit of tracks on the tracks between the tracks that are traced.

Inventions as claimed in claims 7 and 8 are characterized in that in a digital picture image signal recording or reproducing method as claimed in claims 3 and 4, the reproducing speed of the tape recording medium is set at multiple speeds comprising a submultiple or a multiple of the number of unit tracks essential data to decoding the recorded digital picture image signals are derived at every reproducing speed, and the essential data are recorded in different recording areas of the track at every reproducing speed and the recording areas are arranged symmetrically with respect to the longitudinal center line of the recording medium in the state that the oblique direction of the tracks with respect to the longitudinal center line of the recording medium is mapped to the perpendicular direction with respect to the longitudinal center line of the recording medium.

An invention as claimed in claim 9 is characterized in that in a digital picture image signal recording or reproducing apparatus which is capable of recording digital picture image signals compressed by a high efficiency encoding technique on a tape recording medium running at a prescribed speed by forming tracks sequentially oblique to its traveling direction using rotary heads, recording plural kinds of tracking pilot signals with different frequencies which are cycling in a prescribed track period on adjacent tracks and reproducing digital picture image signals while running the tape recording medium at multiple prescribed speeds faster than the recording speed, the apparatus is provided with data generating means for generating and deriving data from the digital picture image signals, that become essential to decoding the digital picture image signals at every reproducing speed, first buffer means comprising multiple buffers for temporarily storing derived data, first data rate conversion means for converting a data rate of the digital picture image signals into a prescribed more faster data rate, recording system selecting means for selectively arranging the data from the first data rate conversion means and multiple data from the first buffer means time series so as to form and output a data train corresponding to a prescribed tape format, recording means for recording the data train from the recording system selecting means and the multiple pilot signals using the rotary heads, reproduction means for reproducing the data train and the pilot signals using the rotary heads while running the tape recording medium at a speed responsive to a control signal so as to control the tracking based on the pilot signals, reproduction system selecting means for selecting to output data which are essential to decoding operations from the reproduction means or standard speed reproduction data in response to a control signal indicating whether the reproduction is the particular speed reproduction, second buffer means for sequentially outputing data that become essential to decoding the data output from the reproduction system selecting means in the reproduction at a two times speed to a decoding circuit after holding them for a prescribed period, and second data rate conversion means for converting to output standard speed reproduction data that are output from the reproduction system selecting means in the standard speed reproduction to the original data rate.

An invention as claimed in claim 10 is characterized in that in a digital picture image signal recording method for recording digital picture image signals compressed by a high efficiency encoding technique on a tape recording medium running at a prescribed speed using rotary heads by sequentially forming tracks which are in mutually different azimuth to adjacent tracks oblique to the running direction, the method comprises the steps of deriving data that are essential to decoding digital picture image signals from the high efficiency encoded digital picture image signals, and recording the data for the particular speed reproduction mode operation while running the tape recording medium at a speed different from the recording speed on the positions of the tape recording medium that is traced by the rotary heads by performing the independent encoding in variable length separately for each of the azimuth channels so that the recorded data can be reproduced by either of the double azimuth heads and oppositely arranged mono-azimuth heads.

An invention as claimed in claim 11 is characterized in that in a digital picture image signal recording method as claimed in claim 10, the data are divided into two parts on the picture and recorded on each track and the recorded azimuth can be changed at each picture updating period in the particular speed reproduction.

An invention as claimed in claim 12 is characterized in that in a digital picture image signal recording method as claimed in claim 10, the data are divided into two parts on the picture and are further divided into N parts in each of the halved parts and recorded on each track so that the picture is updated for each N divided data and the recording azimuth can be changed whenever the picture image is updated.

An invention as claimed in claim 13 is characterized in that in a digital picture image signal recording or reproducing apparatus which is capable of recording digital picture image signals compressed by a high efficiency encoding technique on a tape recording medium running at a prescribed speed by forming tracks, which are mutually in different azimuths with adjacent tracks, sequentially oblique to its running direction using rotary heads, and recording plural kinds of tracking pilot signals with different frequencies on adjacent tracks which are cycling in a prescribed track period and reproducing digital picture image signals while running the tape recording medium at multiple prescribed speeds faster than the recording speed, the apparatus is provided with data generating means for generating to derive data which are essential to decoding signals from the digital picture image signals so that they can be reproduced by either of double azimuth heads and oppositely arranged mono-azimuth heads, first buffer means comprising multiple buffers for temporarily storing derived data, first data rate conversion means for converting the digital picture image signal data rate into a more faster prescribed data rate, recording system selecting means for selectively arranging data from the first data rate conversion means and multiple data from the first buffer means time series so as to form and output a data train corresponding to a prescribed tape format, recording means for recording the data train from the recording system selecting means and multiple pilot signals using the rotary heads, reproduction means for reproducing the data train and pilot signals by the rotary heads while running the tape recording medium at a speed responding to a control signal so as to perform the tracking control based on the pilot signals, reproduction system selecting means for selecting to output data which are essential to decoding the digital picture image signals or ordinary reproduced data from the reproduction means in response to a control signal showing whether the reproduction is at a two times speed, second buffer means for sequentially outputing data which are essential to decoding the digital picture image signals output from the reproduction system selecting means in the reproduction at a two times speed after holding them for a prescribed period, and second data rate conversion means for converting to output the data rate of ordinary reproduced data that are output from the reproduction system selecting means in the standard speed reproduction to the original data rate.

Inventions as claimed in claims 14 and 15 are characterized in that a digital picture image signal recording or reproducing method as claimed in claims 3 and 4 further comprises the steps of setting the running speed of the tape recording medium at the reproduction at multiple speeds comprising submultiples or multiples of the number of unit tracks, and establishing multiple data recording areas, each of which is independently provided for each speed, within the number of unit tracks and arranging these recording areas on positions symmetrical about points on the longitudinal axial line of the tape recording medium for each speed in the state that the oblique direction of the tracks with respect to the longitudinal center line of the recording medium is mapped to the perpendicular direction with respect to the longitudinal center line of the recording medium.

Inventions as claimed in claims 16 and 17 are characterized in that in a digital picture image signal recording or reproducing method as claimed in claims 3 and 4, all the tracks described above are formed by multiple rotary heads in different azimuths, and further the data recording areas are formed on tracks in the same azimuth for each reproducing speed, respectively.

An invention as claimed in claim 18 is characterized in that a digital picture image signal recording or reproducing apparatus as claimed in claim 9 is further provided with means for adding a signal to data which are essential to the decoding to direct a running speed unit of the tape recording medium at a particular reproducing operation the recorded data.

An invention as claimed in claim 19 is characterized in that a digital picture image signal recording or reproducing apparatus as claimed in claim 9 is further provided with means for adding a signal to data which are essential to the decoding to indicate whether the data are effective signals for reproduction.

Inventions as claimed in claims 20 and 21 are characterized in that in a digital picture image signal recording or reproducing method as claimed in claims 5 and 6, data for multiple reproducing speeds are recorded with a track range indication signal showing unit of the repetitive recording added.

An invention as claimed in claim 22 is characterized in that a digital picture image signal recording or reproducing apparatus as claimed in claim 19 is further provided with means for detecting to discriminate a signal from the data recorded on and reproduced from the tape recording medium indicating whether the data are effective signals, and means for displaying that invalid data were recorded if they were judged to be invalid as a result of the discrimination.

Inventions as claimed in claims 23 and 24 claim 16 are characterized in that a digital picture image signal recording or reproducing method as claimed in claims 20 and 21 further comprises the steps of detecting a signal showing unit of the repetitive recording from the reproduced data, judging based on the detected signal that one trace was repetitively performed by the rotary heads consecutively for each unit of tracks by more than the numbers that are decided by the number of times determined by spaces of the tracks and the reproduced data are rearranged in the same order as in the recording.

Inventions as claimed in claims 25 and 26 are characterized in that a digital picture image signal recording or reproducing method as claimed in claims 3 and 4 further comprises the steps of setting the reproduction speed of the tape recording medium at multiple speeds comprising a multiple of unit of tracks, deriving the essential data to decoding at each reproducing speed, and recording the essential data in the different recording areas of the tracks at each reproducing speed and therefore, amount of information differs for each reproducing speed and the lower a reproducing speed, the more amount of information.

An invention as claimed in claim 27 is characterized in that in a digital picture image signal recording or reproducing method which records or reproduces digital picture image signals compressed by a high efficiency encoding technique on or from a tape recording medium running at a prescribed speed using rotary heads by sequentially forming tracks on the recording medium oblique to its running direction, the method further comprises the steps of establishing prescribed recording areas on the tracks from which recorded signals can be reproduced by the rotary heads when reproducing them while running the tape recording medium at a speed faster than the recording speed, deriving data essential to decoding the high efficiency encoded digital picture image signals, which are recorded in the recording areas together with data for identifying the data, and reproducing the data to controlling the reproduction operation based on the identified data.

An invention as claimed in claim 28 is characterized in that in a digital picture image signal recording or reproducing method as claimed in claim 27, the identified data is a data indicating that the data essential to decoding are effective data for reproduction.

An invention as claimed in claim 29 is characterized in that in a digital picture image signal recording or reproducing method as claimed in claim 27, the identification data is a data indicating a two times speed at reproduction.

An invention as claimed in claim 30 is characterized in that in a digital picture image signal recording or reproducing method as claimed in claim 27, the identification data is a data specifying a track on which the data is recorded.

According to the inventions as claimed in claims 1 and 2, as data recording areas for the particular speed reproduction are provided in unit of tracks that are discriminated by tracking pilot signals, the perticular speed reproduction becomes possible by discriminating the pilot signals only.

According to the inventions as claimed in claims 3 and 4, as speed times for the reproduction is determined based on the number of tracks that is discriminated by tracking pilot signals and track areas reproducible by the heads can be reserved widely at small number times speeds, the recording areas expand more wide for the particular speed reproduction and at small number times speeds, more DCT low frequency component data and picture image data in more wide range than at large number times speeds can be recorded or reproduced and it is possible to provide stabilized and high-quality picture images in respective particular speed reproductions.

According to the inventions as claimed in claims 5 and 6, as particular speed reproduction data generated for the particular times speed are recorded successively for a prescribed times that are determined by unit of tracks in track space at each track space traced by the reproducing heads at respective times speeds, even when data becomes reproducible at any track at the particular speed reproduction, particular speed reproduction data at the particular times speed can be reproduced for each unit of tracks.

According to the inventions as claimed in claims 7 and 8, as the particular speed reproduction data areas are provided at the symmetrical positions of the central portion of a tape as the center line in the state that the oblique direction of the tracks with respect to the longitudinal center line of the recording medium is mapped to the perpendicular direction with respect to the longitudinal center line of the recording medium, the reproduction at a speed corresponding to the reverse direction particular times speed in the particular speed reproduction, and it is possible to reproduce a wide particular speed reproduction data area containing much amount of data and prevent deterioration in quality of picture at a small number times speed.

The invention as claimed in claim 9 is to record digital picture image signals on a magnetic tape in a prescribed format by arranging multiple particular speed reproduction data corresponding to multiple particular times speeds time series in an empty area produced when the digital picture image signals are converted to a data rate for the recording or reproducing apparatus by utilizing that a data rate handled in the magnetic recording or reproducing apparatus is larger than a data rate of digital picture image signals being transmitted.

According to the invention as claimed in claim 10, particular speed reproduction data are encoded in variable length separately and independently and recorded on a magnetic tape for each azimuth channel so that they can be reproduced by both the double azimuth heads and the oppositely arranged mono-azimuth heads, it is possible to achieve a tape format for particular speed reproduction having an interchangeability for a digital VTR equipped with two kinds of different rotary heads.

According to the invention as claimed in claim 11, by splitting picture image data that are to be recorded for each of azimuth channels into two parts and changing a recording azimuth of the halved picture image data at every picture image updating period at the particular speed reproduction, it becomes possible to reproduce one picture image certainly in spite of small amount of information to be reproduced even when reproducing only one of the azimuth channels as in not only the double azimuth heads but also the oppositely arranged mono-azimuth heads. This is because in the case of the mono-azimuth opposite heads, a picture image is updated by half at every update period and nearly one picture image can be reproduced in two times of the updating period.

According to the invention as claimed in claim 12, as a picture image is largely split into two parts, each of the split parts is further divided into N parts, and the picture image is updated for each of N divided parts, and by changing the recording azimuth of data in unit of 1/N at the time of updating of the 1/N divided picture image, the 1/(2N) part of the picture image is reproduced at every updating period and approximately one picture image can be reproduced a 2N times of the updating period.

According to the invention as claimed in claim 13, even when a magnetic tape in the format with data recorded using a digital VTR equipped with double azimuth heads is used on a mono-azimuth opposite head digital VTR, particular speed reproduction data of the mono-azimuth channel is reproduced independently and therefore, it becomes possible to give the interchangeability to a digital VTR equipped with different heads.

According to the inventions as claimed in claims 14 and 15, as the particular speed reproduction data areas are arranged on positions symmetrical about points on the longitudinal axial line of the tape recording medium in the state that the oblique direction of the tracks with respect to the longitudinal center line of the recording medium is mapped to the perpendicular direction with respect to the longitudinal center line of the recording medium, and this is repetitively performed in unit of the tracks, the reproduction corresponding to an applicable time speed becomes possible even in the particular speed reproduction at a two times speed in the reverse direction.

According to the inventions as claimed in claims 16 and 17, as particular speed reproduction data recording area for single particular times speed reproduction is set on a mono-azimuth track, it becomes possible to obtain the same particular speed reproduction data by both a head in the construction to sequentially trace tracks of respective azimuths one by one as well as a head in the construction to reproduce the recorded data by simultaneously tracing multiple azimuth tracks in the standard speed reproduction.

According to the inventions as claimed in claims 18, 20 and 21, when selecting reproduction data fitted to a current reproducing speed, the reproduction data can be selected precisely only by a prescribed identification signal added to each data without deriving it again from Track No., synch block ID and the like.

According to the inventions as claimed in claims 19 and 22, it becomes possible to provide a cheap recording apparatus without changing the recording areas and by deleting the particular speed reproduction data generating means from the recording apparatus when more than one data generating means out of multiple particular speed reproduction data generating means are deleted and an identification number is added to data to be recorded in the recording areas of particular speed reproduction data at this deleted speed and ordinary reproducing data.

According to the inventions as claimed in claims 23 and 24, if the head tracing was carried out over the data repetitive recording areas, it becomes possible to rearrange data in the original data sequence using the data traced before and after the head tracing.

According to the inventions as claimed in claims 25 and 26, amount of information is much at lower reproducing speeds and it is possible to prevent deterioration in quality of picture produced in the reproduction at a low speed and obtain easy to see and stabilized particular speed reproduction video at any reproducing speed.

According to the inventions as claimed in claims 27 through 30, it becomes possible to identify essential data to decoding irrespective of presence of pilot signals.

Additional objects and advantages of the present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a diagram showing a tape format for explaining the digital picture image signal recording or reproducing method and the reproduction signal envelopes of the reproducing heads at +4(-2), +8(-6) and +24(-22) times speeds of one embodiment of the present invention;
FIGURE 2 is a diagram showing the detailed tape format shown in FIGURE 1;
FIGURE 3 is a diagram showing the construction of 1 Sync shown in FIGURE 2;
FIGURE 4 is a diagram showing the construction of frames that are used in the embodiments of the present invention:
FIGURE 5 is a diagram showing the construction of the rotary drum equipped with the singular location double azimuth heads that are used in the embodiments of the present invention;
FIGURE 6 is a diagram showing the VTR's tape format that is used in the embodiments of the present invention;
FIGURE 7 is diagram showing generated voltages of the tracking pilot signals F1 and F2 in the VTR that is used in the embodiments of the present invention;
FIGURE 8 is a block diagram showing the construction of the digital VTR involved of one embodiment of the present invention;
FIGURE 9 is a block diagram showing the tracking control system that is used in the magnetic recording or reproducing apparatus of the present invention;
FIGURE 10 is a diagram showing the tape format for explaining the digital picture image signal recording or reproducing method in another embodiment of the present invention;
FIGURE 11 is a diagram for explaining one example of the data recording method that is used for performing the recording or reproducing method shown in FIGURE 10;
FIGURE 12 is a block diagram showing the construction of the digital VTR involved in another embodiment of the present invention;
FIGURE 13 is a diagram showing the tape format for explaining the digital picture image signal recording or reproducing method in another embodiment of the present invention;
FIGURE 14 is a diagram showing the reproduction signal envelopes of the reproducing heads at +4(-2), +8(-6) and +24(-22) times speed shown in FIGURE 13;
FIGURE 15 is a diagram showing the scanning loci of the oppositely arranged mono-azimuth heads on a tape format when reproducing data at +4(-2), +8(-6) and +24(-22) times speeds;
FIGURE 16 is a diagram showing the detailed tape format shown in FIGURES 13 and 15;
FIGURE 17 is a diagram showing the construction of ID in 1 Sync;
FIGURE 18 is a diagram showing the construction of the reproduction system selector shown in FIGURE 8;
FIGURE 19 is a diagram for explaining the data rearranging operation;
FIGURE 20 is a diagram showing the tape format for a conventional digital VTR for consumer use;
FIGURE 21 is a diagram showing the construction of the rotary drum equipped with the oppositely arranged mono-azimuth heads;
FIGURE 22 is a diagram showing the picture image construction of one GOP in the MPEG;
FIGURE 23 is a diagram showing the relationship between the scanning loci of the heads and the reproduction signal envelopes at +5(-3), +9(-7) and +17(-15) times speeds;
FIGURE 24 is a diagram, showing the particular speed reproduction area that is recorded on a tape for performing a conventional particular speed reproduction;
FIGURE 25 is a diagram showing I-frame data that is used for the particular speed reproduction;
FIGURE 26 is a table (TABLE 1) for explaining picture image updating sequences in the particular speed reproduction; and
FIGURE 27 is a table (TABLE 2) for explaining constructions of Sync block IDs.

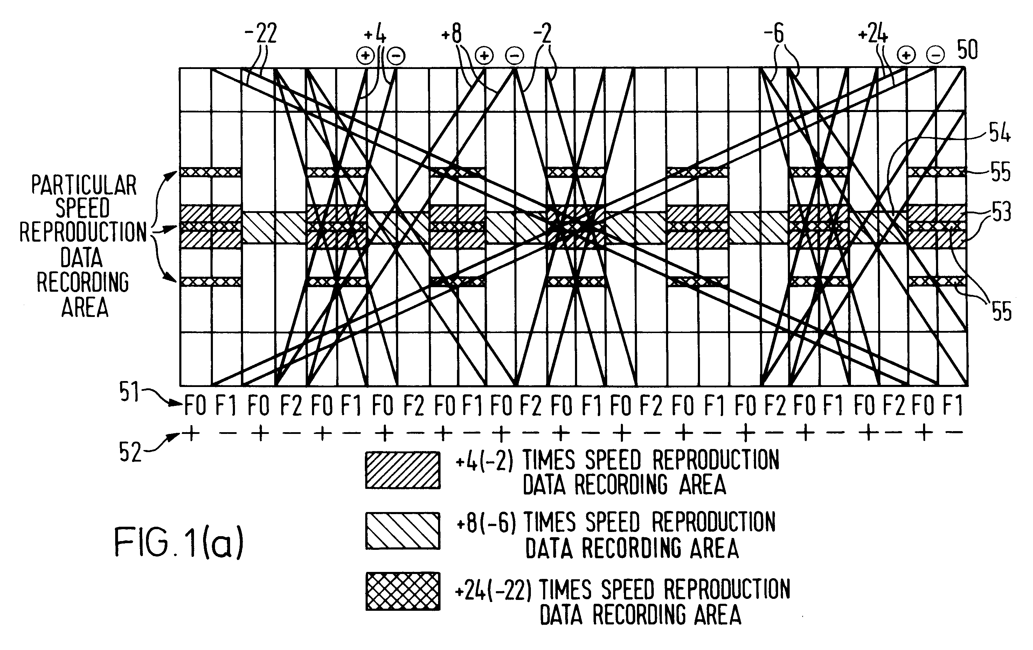

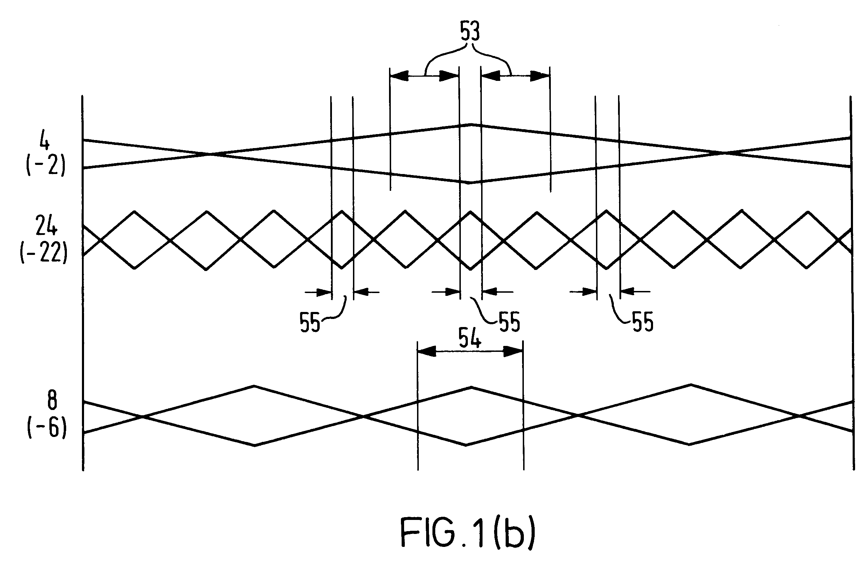

The present invention will be described in detail with reference to FIGURES 1 through 19, 26 and 27.

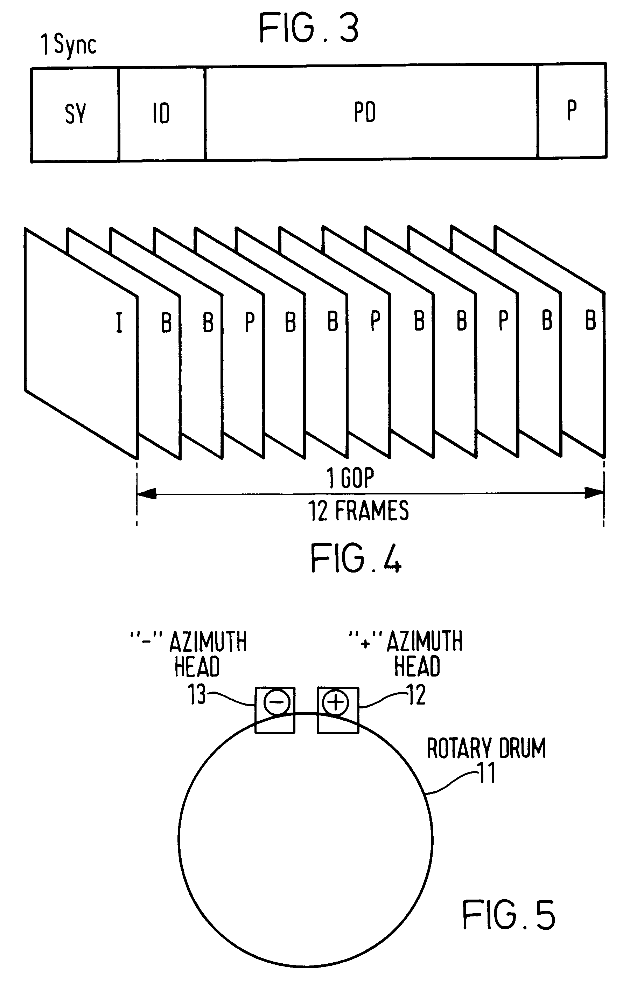

Before explaining the digital picture image signal recording or reproducing method of one embodiment of the present invention in FIGURES 1 through 3, the principle of this embodiment will be explained referring to FIGURES 4 through 7. Further, the international standard system MPEG is used as the high efficiency encoding in this embodiment.

FIGURE 4 shows the construction of frames that are used in the embodiment of the present invention.

As shown in FIGURE 4, one GOP (Group of Picture in the MPEG) is comprised of one I-frame, three P-frames and eight B-frames, total 12 frames. The rotary heads of a VTR used in the embodiment of the present invention are in such the construction as shown in FIGURE 5, that is, a rotary drum 11 is provided with singular location double azimuth heads 12, 13 on the top. The tape winding angle is approximately 180° and by rotating the rotary head at 9000 rpm, the recording areas of 10 tracks per 1/30 sec. is secured. Further, a pair of double azimuth heads are provided at the locations opposite to the double azimuth heads 12, 13 on the rotary drum and the same recording area can be secured even when these heads are rotated at 4500 rpm.

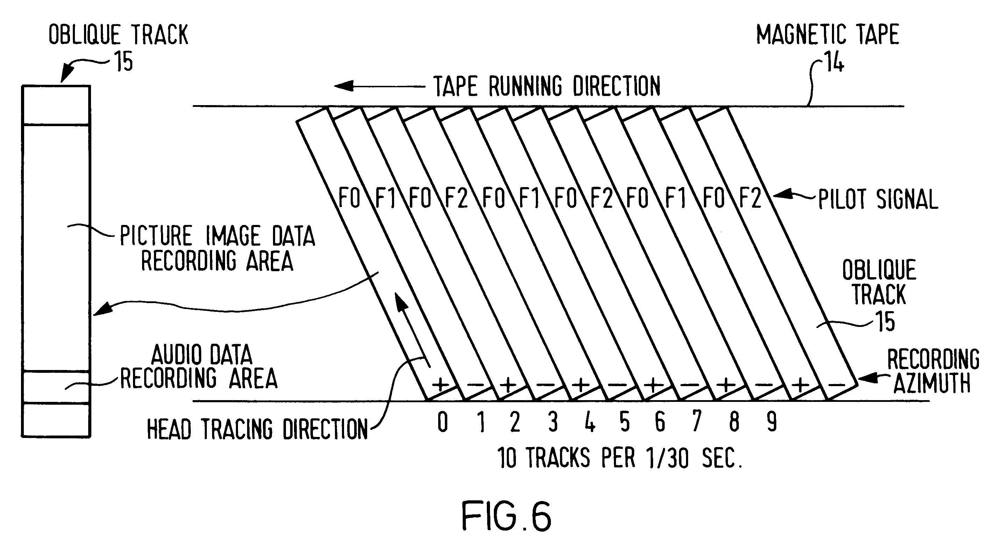

The tape format of a VTR that is used in the embodiment of the present invention is shown in FIGURE 6(a). Data are recorded or reproduced on or from oblique tracks 15 on a magnetic tape 14 using the rotary head shown in FIGURE 5. Further, pilot signals F1, F0, F2 which are required for making the tracking are recorded on the tracks 15 in order of F0, F1, F0, F2. On the tracks 16, the pilot signals are recorded by superposing over picture image data and voice data to be recorded at the period of four signals F0, F1, F0, F2 by forming an opposite azimuth with the adjacent track. Each track 15 is provided with a picture image data area and a voice data area as shown in FIGURE 6(b). The tape is in the format to use 10 tracks per 1/30 sec, that is equivalent to one frame time. Hereinafter, the F1, F0, F2 will be used to discriminate the tracks 15.

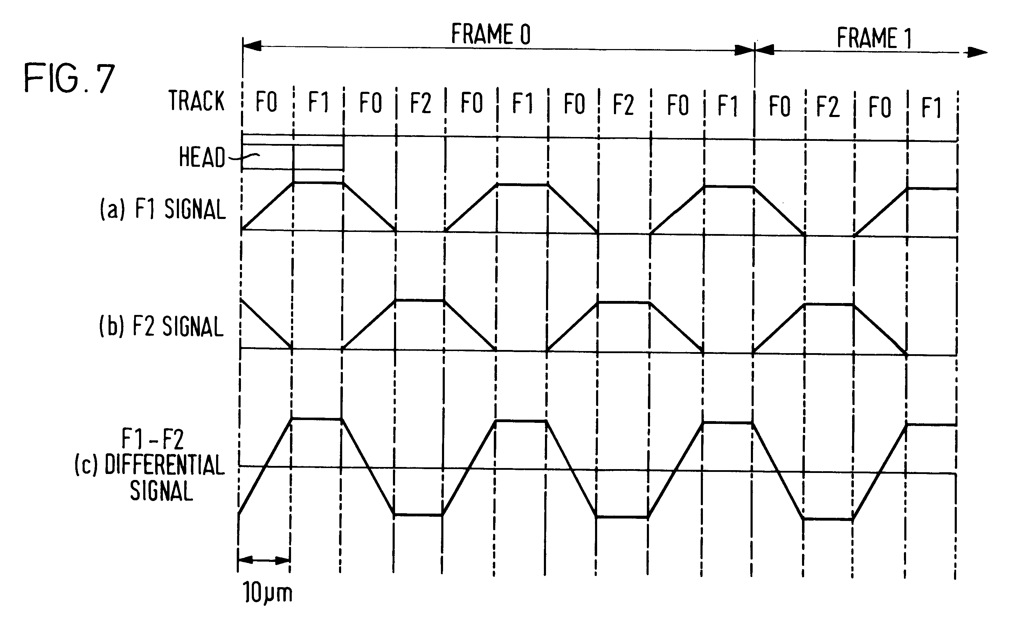

Voltages generated for the pilot signals F1 and F2 at the center of the reproducing head width 20 µm against the track width 10 µm are shown in FIGURES 7(a) and 7(b). A difference of reproduction signal envelope voltages of the pilot signals F1 and F2 is shown in FIGURE 7(c) as F1 - F2.

At the portions showing the change of the differential voltage F1 - F2 shown in FIGURE 7(a), it is seen that voltage becomes 0 V when the center of the head comes to the center of the track F0. That is, it becomes possible to perform the tracking by controlling a tape carrying servo motor so that the differential voltage F1 - F2 becomes 0 V. Further, by checking the inclination of the differential voltage F1 - F2 when the tracking is performed, it is possible to discriminate which F0 is the applicable signal period among the F0, F1, F0, F2 periods. For instance, if the differential voltage F1 - F2 is ascending at the right side, it is seen that F0 is that one between F1, F0, F2 and if the differential voltage F1 - F2 is descending at the right side, F0 is that one between F1, F0, F2.

FIGURE 1(a) is a schematic diagram of tape format for explaining one example of the digital picture image signal recording or reproducing method according to the present invention.

FIGURE 1(a) also shows scanning loci of the reproducing heads at the +4(-2), +8(-6) and +24(-22) times speeds with respect to the tape format added with a particular speed reproduction data recording area according to the present invention. Two scanning loci of the reproducing heads at respective reproducing speeds present the scanning loci of the centers of two of the "+" and "-" azimuth heads 12, 13 comprising the singular location double azimuth heads shown in FIGURE 5. Pilot signals are shown by reference numeral 51 and azimuths of the recording trucks are shown by reference numeral 52. Reproducing head azimuths in the particular speed reproduction are shown in "+" and "-" by reference numeral 50.

FIGURE 1(b) shows the reproduction signal envelopes obtained by the reproducing heads at the +4(-2), +8(-6) and +24(-22) times speeds. The reproduction signal envelopes at this time are the envelops by the same 20 µm wide head against the 10 µm wide track. In FIGURE 1(b), data recording areas for +4(-2) times speed, +8(-6) times speed, and +24(-22) times speed are provided in areas 53 and 53, 54, and 55, 55 and 55, respectively. Here, the number of tracks equivalent to the pilot signal repetitive period, that is, 4 tracks are made one group. As shown in FIGURE 1(a), for each group comprising 4 tracks, the +4(-2) times speed data recording areas 53 and 53, +8(-6) times speed data recording area 54, and +24(-22) times speed areas 55, 55 and 55 have been continuously recorded over two tracks.

From FIGURE 1(a), the particular speed reproduction data area of the tape format is the four track period, the speed unit of the particular speed reproduction is a multiple of four (e.g., +4, +8, +24) in the right direction and in the reverse direction, a number subtracted by 2 from a multiple of four (e.g., -2, -6, -22) in the reverse direction are used, there is always a point where the tracking is applied in four tracks, which is the pilot signal period.

The tracking method at this time will be definitely explained. In the particular speed reproduction at the +4(-2) and +24(-22) times speeds, it becomes possible to carry out the tracking by detecting pilot signals at the center of the track by controlling the differential voltage F1 - F2 shown in FIGURE 7 to incline upward at the right side and to 0 V. Likewise, the reproduction becomes possible at the +8(-6) times speed by controlling the differential voltage F1 - F2 to incline downward at the right side and 0 V at the center of the track.

Although it is described above that there is one tracking point in four tracks at respective speeds in the particular speed reproduction, as some groups may be skipped at every head tracing, the same particular speed reproduction data are recorded successively for two adjacent groups of tracks at the +4(-2) times speed, four groups of tracks at the +8(-6) times speed and twelve groups of tracks at the +24(-22) times speed in order to maintain the continuity of data for particular speed reproduction. This recording will maintain the continuity of particular speed reproduction data even when the tracking is carried out at any tracking point and it becomes possible to generate high efficiency encoded data for particular speed reproduction utilizing the relationship with preceding data and improve quality of picture in the particular speed reproduction with a less recording capacity, and the hardware scale is cut down as there is less changes when generating particular speed reproduction data from standard speed reproduction data.

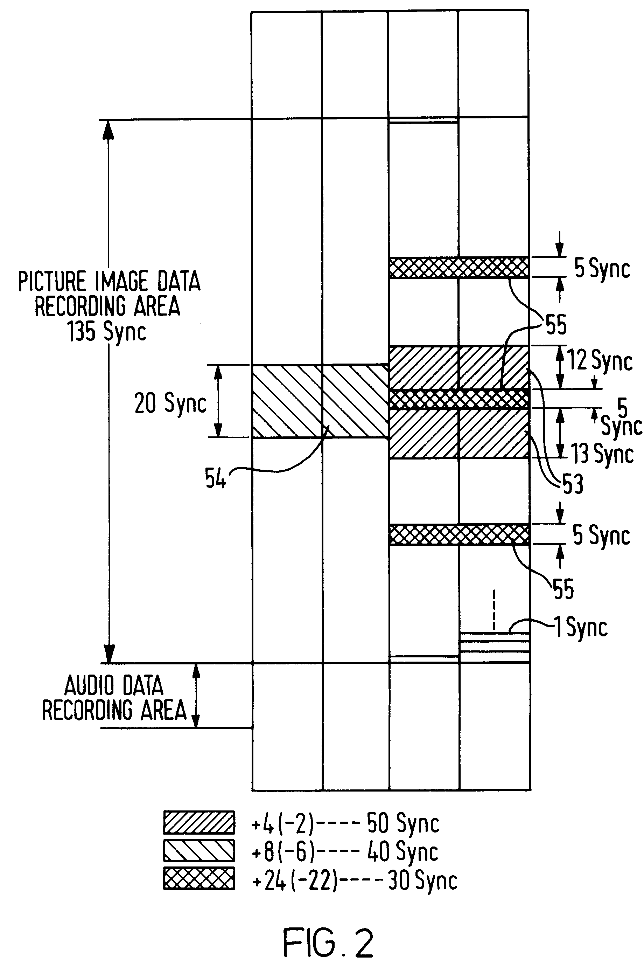

The tape format shown in FIGURE 1 is shown in FIGURE 2 in more detailed expression.

In FIGURE 2, sections denoted by reference numeral 53 are recording areas for data associated with the +4(-2) times speed mode operation, which are comprised of two areas provided at symmetrical positions with respect to the central portion of a tape. Sections denoted by reference numeral 54 are recording areas for data associated with the +8(-6) times speed mode operation, which is comprised of one area arranged symmetrically with respect to the longitudinal central portion of a tape. Sections denoted by reference numeral 55 are recording areas for data associated with the +24(-22) times speed mode operation, which is comprised of three areas arranged symmetrically with respect to the central portion of a tape. Each of the tracks is provided with a picture image data areas and a voice data area. The picture image data recording area is divided into 135 Sync areas. The particular speed reproduction data area has a recording capacity for 25 Syncs per track for the +4(-2) times speed, a recording capacity for 20 Syncs per track for the +8(-6) times speed, and a recording capacity for 15 Syncs per track for the +24(-22) times speed. Thus in case of four tracks being united in one unit, there is a recording capacity for 50 Syncs at the +4(-2) times speed, a recording capacity for 40 Syncs at the +8(-6) times speed and a recording capacity for 30 Syncs at the +24(-22) times speed.

A unit construction of the Sync is shown in FIGURE 3. As shown in FIGURE 3, the unit of the Sync is comprised of a sync pattern SY, an identification information ID comprising a recorded track number, etc., a picture image data recording area PD, and an error detection and correction parity P, wherein the picture image data recording area PD has 77 bytes per Sync.

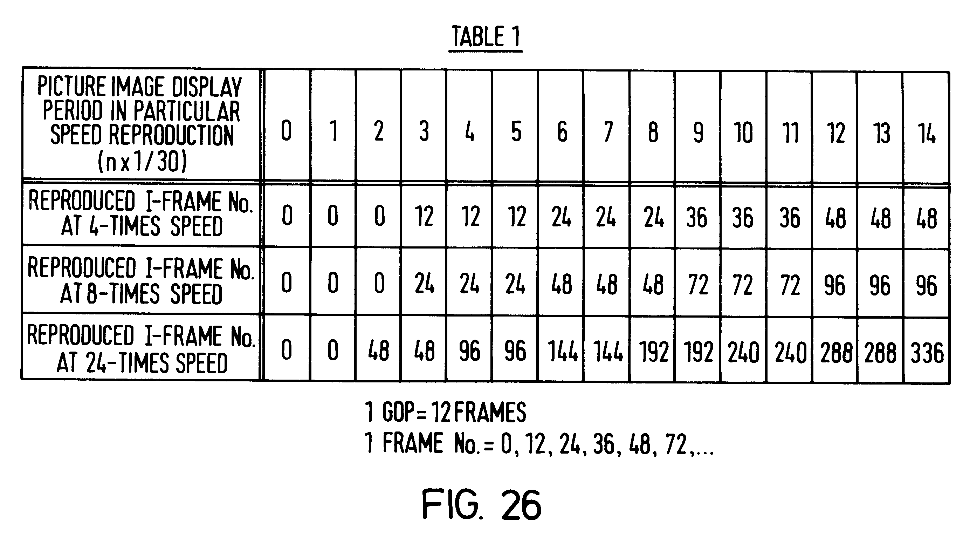

FIGURE 26 is a table (TABLE 1) indicating picture image updating sequences in the particular speed reproduction.

From TABLE 1 (FIGURE 1), the frame is updated at every 1/10 sec, at the +4(-2) and +8(-8) times speeds and at every 1/15 sec, at the +24(-22) times speed. Amount of data comprising one frame at this time 750 Syncs at the +4(-2) times speed, 600 Syncs at the +8(-6) times speed and 300 Syncs at the +24(-22) times speed. As amount of data increases at lower times speeds and some of AC component of DCT coefficient can be recorded, the quality of picture is improved at small number times speeds.

Next, the construction of a digital VTR achieving the above principle will be explained.

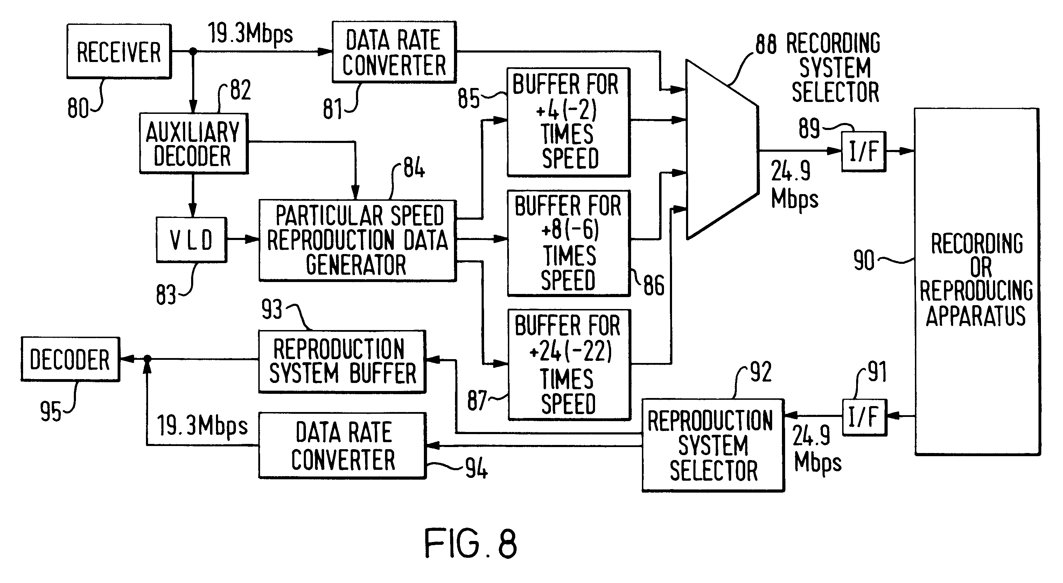

FIGURE 8 is a block diagram showing the construction of a digital VTR involved in one embodiment of the present invention.

In FIGURE 8, a receiver 80 receives data being transmitted through an antenna or a cable, takes out and outputs only a bit stream of the MPEG. That is, intra-frame or inter-frame compressed picture image data (one GOP frame data) encoded in variable length after the DCT process is output from the receiver 80. A data rate converter 81 converts a data rate (for instance, 19.3 Mbps) of the MPEG bit stream from output from the receiver 80 into a data rate (for instance, 24.9 Mbps) of a magnetic recording or reproducing apparatus. The data at the converted data rate is output synchronous with data output from a +4(-2) times speed buffer 85, a +8(-6) times speed buffer 86 and a +24(-22) times speed buffer 87. That is, the data converted into the data rate of the tape format for the magnetic recording or reproducing apparatus 90 is output from the data rate converter 81. For this data with a converted data rate, an empty area sufficient enough to contain data from buffers 85A through 87B, which are described later, is formed. An auxiliary decoder 82 takes out only the I frame picture image from the MPEG bit stream, decodes and outputs I frame picture image data in variable length by a variable length decoder (VLD) 83. A particular speed reproduction data generating circuit 84, takes out three coefficients from DC component and low frequency component of AC coefficient of the data output from the variable length decoder 83, and obtaining various header information required for reproduction of the MPEG from the auxiliary decoder 82, outputs them to the +4(-2) time speed buffer 85, taking two coefficients out of DC component and low frequency component of AC coefficient of picture image data, outputs them to the +8(-6) times speed buffer 86, and taking out only DC component of picture image data, outputs it to the +24(-22) times speed buffer 87. The buffers 85A through 87B store data from the particular speed reproduction data generator 84. These stored data are then sequentially read out in the tape format of the magnetic recording or reproducing apparatus 90 by a recording system selector 88. The recording system selector 88 selects data output from the data rate conversion circuit 81 and data output from the buffers 85A through 87B and outputs them to an interface (I/F) 89, and a data stream in the tape format of the magnetic recording or reproducing apparatus 90 is thus formed. The interface (I/F) 89 adds an error correction parity, sync signal and ID signal to the data output from the recording system selector 88 and outputs the data to the magnetic recording or reproducing apparatus 90. The magnetic recording or reproducing apparatus 90 is an apparatus which records supplied data and pilot signals by rotary head (see FIGURE 5) equipped with the singular location double azimuth heads using 10 tracks per 1/30 sec. and reproduces the recorded data while carrying out the tracking based on pilot signals. An interface 91 performs the error correction of the reproduced data from the recording or reproducing apparatus 90 and outputs the error corrected data. A reproduction system selector 92 is to select a destination of data output according to an external control signal showing whether it is the particular speed reproduction and data is output to a data rate conversion circuit 94 in the case of the standard speed reproduction and to a reproduction system buffer 93 in the case of standard speed reproduction. In the data rate conversion circuit 94, the ordinary reproduced data from the magnetic recording or reproducing apparatus 90 is output after converting its data rate to a data rate (for instance, 19, 3 Mbps) which is required by a decoder 95. The reproduction system buffer 93 stores one frame of the particular speed reproduction data output from the reproduction system selector 92 to make it a proper picture image. In the particular speed reproduction in the normal direction, upon storing the particular speed reproduction data for one frame, the data are read out in the sequence of the storage and output to the decoder 95 and in the reproduction in the reverse direction, they are read out in the sequence reverse to the storage and output to the decoder 95. The decoder 95 decodes the MPEG bit stream and after the D/A conversion, outputs analog picture image signals and voice signals.

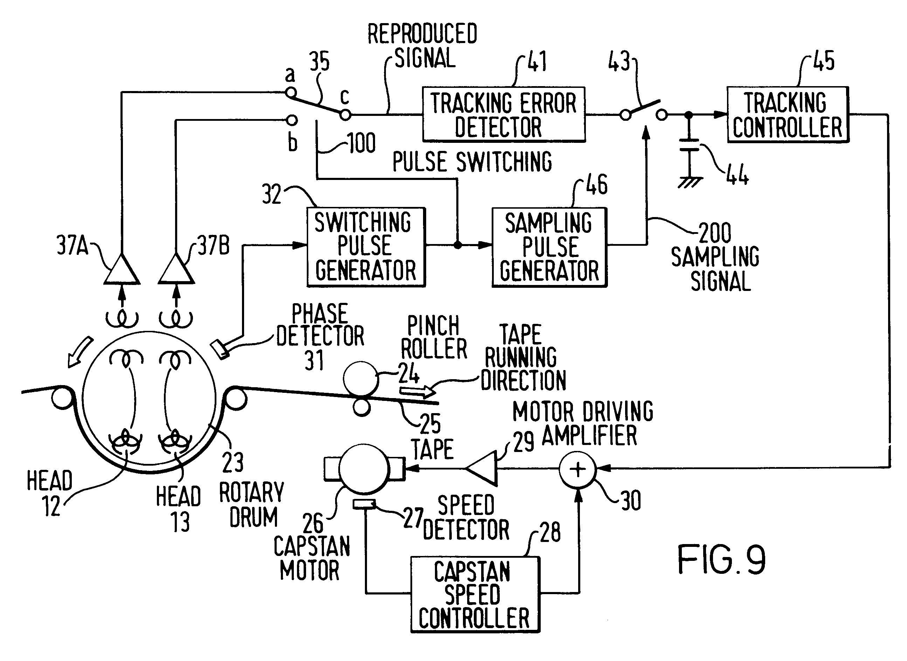

FIGURE 9 shows a block diagram of the tracking control system which is used in the magnetic recording or reproducing apparatus 90. Pilot signals F1, F0 and F2 for the tracking operation are recorded on the recording tracks of a tape 25. In the reproduction, signals reproduced by the heads 12, 13 are amplified by preamplifiers 37A, 37B and input to terminals a, b of a switch 35. As the terminals a, b of the switch 35 are alternately selected by a switching pulse 100 which is generated by a switching pulse generator 32, continuously reproduced signals are obtained through a terminal a of the switch 35 and these signals are input to a tracking error detector 41. The switching pulse generator 32 generates the switching pulse 100 based on phase pulse proportional to the rotary phase of a rotary drum 23 that is obtained from a phase detector 31.

The tracking error detector 41 takes the tracking pilot signal components F1, F0, F2 out of the input reproduced signals and generating error signals F1, F0, F2 indicating bias of signals crosstalking from the adjacent tracks at the left and right to the track currently being traced by the head, outputs them to a switch 43. As the switch 43 is turned ON or OFF based on a sampling signal 200 generated from a sampling pulse generator 46, the output from the tracking error detector 41 is held in a sampling hold circuit comprising the switch 43 and a capacitor 44 for a fixed period and this held signal is input to a tracking controller 45. The sampling pulse generator 46 generates the sampling signal 200 based on the switching pulse 100 generated from the switching pulse generator 32.

The tracking controller 45 outputs the error signal to an adder 30 after executing the gain adjustment and the phase compensation. The error signal is added to a signal output from a capstan speed controller 28 in the adder 30 and the added signal is input to a motor driving amplifier 29. The motor driving amplifier 29 controls the rotation of a capstan motor 26 so as to bring the error signal to a prescribed value according to this input signal. The rotational force of the capstan motor 26 is transmitted to the tape 25 through a pinch roller 24 and the tape is forced to run in the arrow direction. At this time, the running phase (tracking) of the tape 25 is controlled to a constant level by an error signal output from the tracking controller 45. Further, the running speed of the tape can be set by the speed controller 28 and its running direction can be switched by changing the rotational direction of the capstan motor 26 by the motor driving amplifier 29, and particular times speed in the forward or reverse direction reproduction can be set by these circuits.

In the embodiment described above (FIGURES 1 through 9), the particular speed reproduction method and its tape format corresponding to the singular location double azimuth heads construction shown in FIGURE 5. Next, the particular speed reproduction method and its tape format corresponding to the head construction of both the singular location double azimuth heads and the oppositely arranged mono-azimuth heads will be explained.

FIGURE 10 shows the particular speed reproduction tape format for recording using a digital VTR equipped with the singular location double azimuth heads likewise FIGURE 1(a). Here, the data area for the particular speed reproduction at a four times speed is extending over two adjacent tracks indicated by reference numeral 53, which are arranged on both of upper and lower areas symmetrical with respect to the center of each track length. The particular speed reproduction data area on the left side track of each two adjacent tracks is the "+" azimuth recording area, while the particular speed reproduction data area on the right side track is the "-" azimuth recording area. In the reproduction at the four times speed, the scanning locus of the "+" azimuth head of the singular location double azimuth heads is as shown by A in FIGURE 10 and the head scanning locus A is tracing the "+" azimuth recording area of the data area for the four times speed reproduction. Further, the scanning locus of the "+" azimuth head is as shown by B in FIGURE 10 and the scanning locus B is tracing the "-" azimuth recording area of the four times speed reproduction data area. Accordingly, the scanning loci of the singular location double azimuth heads take some pairs of lines A, B and so on.

Now, it is considered to perform the particular speed reproduction using the oppositely arranged mono-azimuth heads as shown in FIGURE 21 for the tape format shown in FIGURE 10 (see also FIGURE 1(a)) with data recorded using the singular location double azimuth heads (however, the rotating speed of the rotary drum is assumed to be the same as the singular location double azimuth heads). In the reproduction at a four times speed, the scanning locus of a "+" azimuth head 4 in the reproduction is that shown by the symbol A in FIGURE 10. On the other hand, the scanning locus of a "-" azimuth head 5 shown in FIGURE 21 opposite to the "+" azimuth head 4 will be the scanning locus (shown by the dotted line) shown by the symbol C in FIGURE 10. However, as the reproducing mode scanning locus C by the "-" azimuth head 5 passes through the "+" azimuth recording area of the four times speed reproduction data area, it becomes the opposite azimuth and cannot be reproduced. Therefore, differing from a case where in two adjacent tracks, one of which is the "+" azimuth recording area and the other is the "-" azimuth recording area, four times speed reproducing data are almost simultaneously reproduced as shown by the symbols A and B using two azimuth heads 12, 13 (FIGURE 5) to obtain all data required for the four times speed reproduction, in a case where two mono-azimuth heads oppositely arranged on a rotary drum like those shown in FIGURE 21 are used, it is only possible to reproduce data in one recording area (the left track recording area of two tracks) by the "+" azimuth head 4 as shown by the symbol A (no reproduction shown by the symbols B and C).

So, in the digital picture image signal recording or reproducing method involved in another embodiment of the present invention, when recording data for the particular speed reproduction by a VTR equipped with singular location double azimuth heads, in order to allow the particular speed reproduction by a VTR equipped with oppositely arranged two mono-azimuth heads, picture image data are recorded in the left track (the left side recording area of the four times speed data area 53 shown in FIGURE 10) of two tracks separately from the right track recording area and data are constructed so that four times speed picture images can be revived only by data reproduced by the "+" azimuth head 4 of the oppositely arranged mono-azimuth head in the reproduction at a four times speed. If data in the left track recording area are not separated from the data in the right track recording area, picture image data encoded in variable length after the DCT process are consecutively recorded with the correlation extending over four recording areas for the four times speed reproduction of the two adjacent left and right tracks, and therefore picture images cannot be revived through the reproduction by one of the azimuth heads (for instance, the "+" azimuth head) of the oppositely arranged mono-azimuth heads.

Therefore, in the case of a digital VTR which records or reproduces digital picture image signals compressed by the high efficiency encoding on or from a tape by the rotary heads, particular speed reproduction data are constructed by low frequency component data of intra-frame or inter-frame compression picture images after the DCT processing and they are recorded on a tape by decoding particular speed reproduction data in variable length separately for each azimuth channel so that they can be reproduced by either the double azimuth heads or the oppositely arranged mono-azimuth heads when arranging the particular speed reproduction data on a tape to be traced by the heads in the particular speed reproduction.

Furthermore, when recording, the picture image data are split into two parts for each azimuth channel and the recording azimuth of the halved picture image data is changed for every picture image updating period.

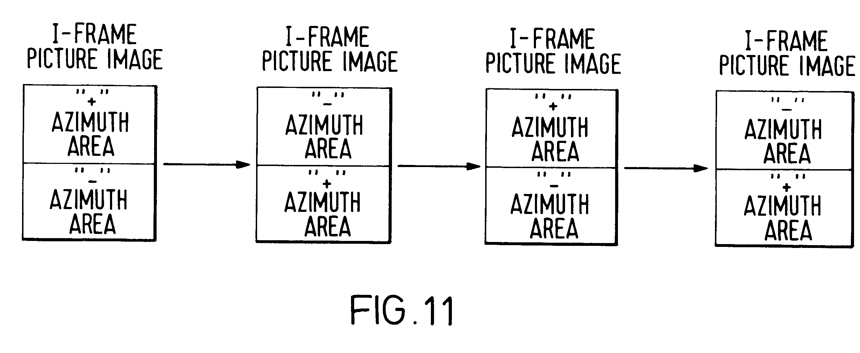

That is, when I-frame picture image (the intra-frame compressed picture image) data existing at every 12 frames are DCT processed, particular speed reproduction data are constructed by their low frequency component data, and after encoding them in variable length, they are arranged as shown in FIGURE 11, in the first frame updating period, the upper half data of the I-frame picture image are recorded in the "+" azimuth area of the track pattern by the "+" azimuth head and then, the lower half data of the I-frame picture image are recorded in the "+" azimuth area of the track pattern by the "+" azimuth head. When data are recorded in this manner, it becomes possible to perform the encoding of particular speed reproduction data in variable length separately for each azimuth channel and at the same time, it becomes possible to change the recording azimuths of the halved upper and lower picture image data for every frame updating period and to perform the reproduction by the oppositely arranged mono-azimuth heads in addition to the reproduction by the double azimuth heads.

For instance, in the reproduction at a four times speed, low frequency components of I-frame picture image data are extracted and amount of data limited to a level that can be contained in the particular speed reproduction data area are recorded in the four times speed area. Here, particular speed reproduction data of a halved picture image are recorded by changing the azimuth.

Next, the constructinn of a digital VTR achieving the principle described above will be explained.

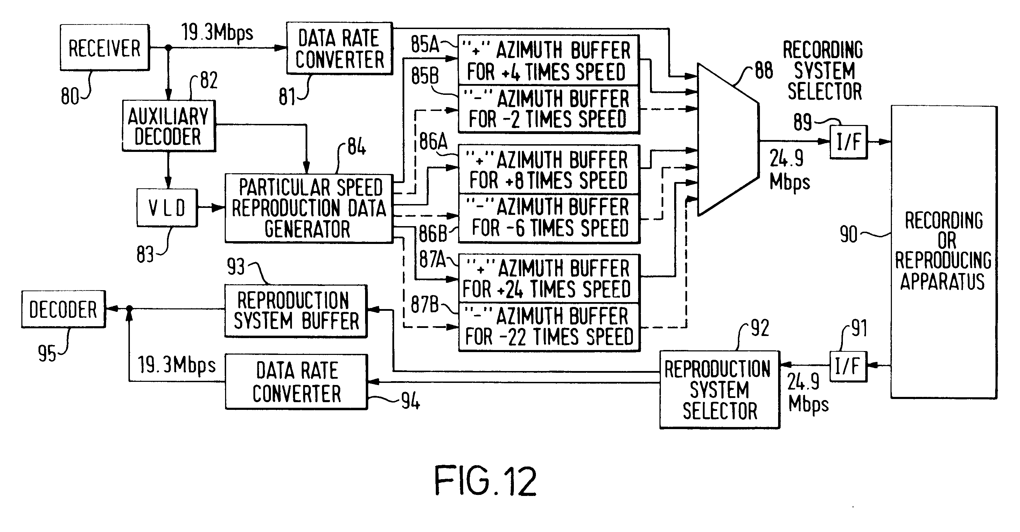

FIGURE 12 is a block diagram showing the construction of a digital VTR in another embodiment of the present invention.

In FIGURE 12, the MPEG's bit stream only is transmitted from the receiver 80. The data rate converter 81 converts a data rate (for instance, 19.3 Mbps) of the MPEG's bit stream into a data rate of the recording or reproducing apparatus (for instance, 24.9 Mbps) (not shown). The data with this converted data rate is output synchronously with the data output from the +4(-2) times speed buffer 85A for the "+" azimuth, the +4(-2) times speed buffer 85B for the "-" azimuth, the +8(-6) times speed buffer 86A for the "+" azimuth, the +8(-6) times speed buffer 86B for the "-" azimuth, the +14(-22) times speed buffer 87A for the "+" azimuth and the +24(-22) times speed buffer 87B for the "-" azimuth. That is, the data with the data rate converted to that of the tape format of the recording or reproducing apparatus are output from the data rate converter 81. In the data with this converted data rate, an empty area sufficient enough to accommodate the data from the buffers 85A through 87B, which are described later, is formed. The auxiliary decoder 82 takes the I-frame picture image only out of the MPEG's bit stream and outputs picture image data of the taken out I-frame after coding or decoding them in variable length in the variable length decoder (VLD) 83. The particular speed reproduction data generator 84 splits picture image data to be recorded for every azimuth channel so that they can be reproduced by both the double azimuth heads and the oppositely arranged mono-azimuth heads, and from DC components and low frequency component of AC coefficient of the split picture image data, takes out three coefficients for the "+" azimuth and the "-" azimuth, and obtaining various header information required for reproduction of the MPEG from the auxiliary decoder 82, outputs them to the +4(-2) times speed buffers 85A and 85B for the "+" azimuth and the "-" azimuth and further, from DC component and low frequency component of AC coefficient of the picture image data, takes out two coefficients for the "+" azimuth and the "-" azimuth and outputs them to the +8(-6) times speed buffers 86A and 86B for the "+" azimuth and the "-" azimuth, and furthermore, taking out only DC component of the picture image data for the "+" and "-" azimuths, outputs them to the +24(-22) times speed buffers 87A and 87B. The buffers 85A through 87B store data from the particular speed reproduction data generator 84, which are read out sequentially by the recording system selector 88 according to the tape format of the recording or reproducing apparatus 90. The recording system selector 88 selects and outputs the data output from the data rate converter 81 and the data output from the buffers 85A through 87B to the interface (I/F) 89 and forms the data stream according to the tape format of the recording or reproducing apparatus 90. In the interface 89, the data output from the recording system selector 88 is added with an error correction parity, sync signal and ID signal and outputs to the recording or reproducing apparatus 90. The recording or reproducing apparatus 90 records received data and pilot signals by the rotary head equipped with the singular location double azimuth heads (see FIGURE 5) using 10 tracks per 1/30 sec, and reproduces the recorded data based on the pilot signals while carrying out the tracking. The interface 91 outputs the data reproduced by the recording or reproducing apparatus 90 after correcting any error. The reproduction system selector 92 is to change a destination of data to be output by an external control signal indicating whether the reproduction is the particular speed reproduction. In case of the standard speed reproduction, data are output to the data rate converter 94 and in case of the particular speed reproduction, data are output to the reproduction system buffer 93. In the data rate converter 94, the data rate of the ordinary reproduced data from the recording or reproducing apparatus 90 is converted to a data required by the decoder 95 (for instance, 19.3 Mbps) and the data are output. In the reproduction system buffer 93, the particular speed reproduction data output from the reproduction system selector 92 are stored for one frame so as to produce a proper picture image. As soon as the particular speed reproduction data for one frame are stored, in case of the particular speed reproduction in the normal direction, data are read out in order of storage and in case of the particular speed reproduction in the reverse direction, data are read out in the reverse order of storage and output to the decoder 95. The decoder 95 outputs analog picture image signals and voice data signals after decoding of the MPEG's bit stream and D/A conversion.

Further, in the digital picture image signal recording or reproducing method explained in FIGURE 10, when arranging the particular speed reproduction data on a tape to be traced by the heads in the particular speed reproduction, it is possible to divide the picture image into two parts and further, divide each of the halved parts into N parts so that the data can be reproduced by both the double azimuth heads and the oppositely arranged mono-azimuth heads, and update the picture image for every N divided part and exchange the recording azimuth for 1/N data when updating the 1/N picture image.

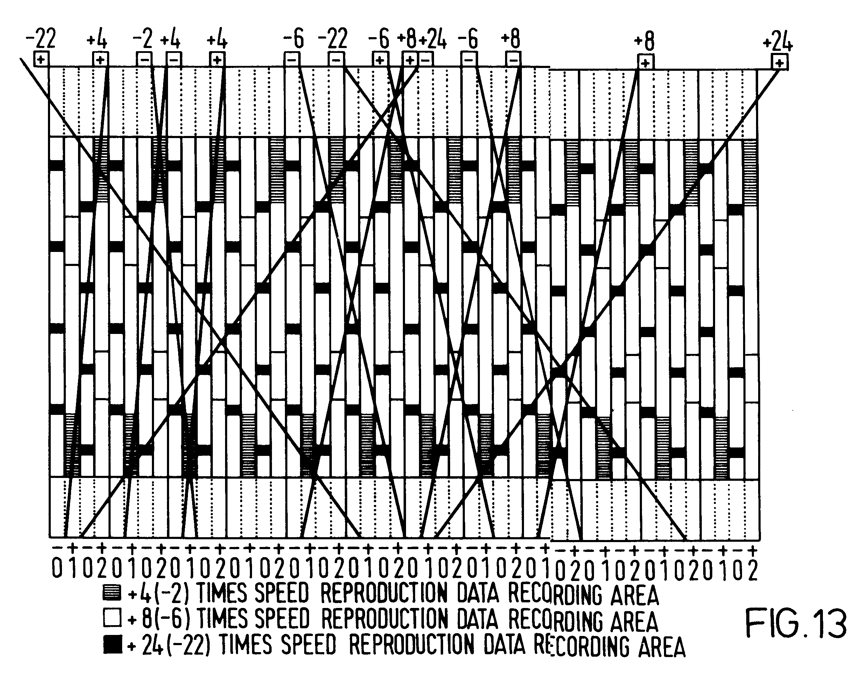

FIGURES 13 through 15 show the tape format for explaining the digital picture image signal recording or reproducing method in another embodiment of the present invention. FIGURE 13 shows the scanning loci of the singular location double azimuth heads when reproducing data at the +4 (-2), +8 (-6) and +24(-22) times speeds on the tape format with the particular speed reproduction data recording areas for respective times speeds added. The scanning loci of the reproducing heads at respective times speeds show the scanning loci at the center of two of the "+" and "-" azimuth heads 12, 13 comprising the singular location double azimuth heads shown in FIGURE 5. Reference numeral 1900 shows pilot signals and reference numeral 1901 shows azimuths or the recording tracks. Further, reference numeral 1902 shows azimuths of the reproducing heads in the particular speed reproduction by the symbols "+" and "-".

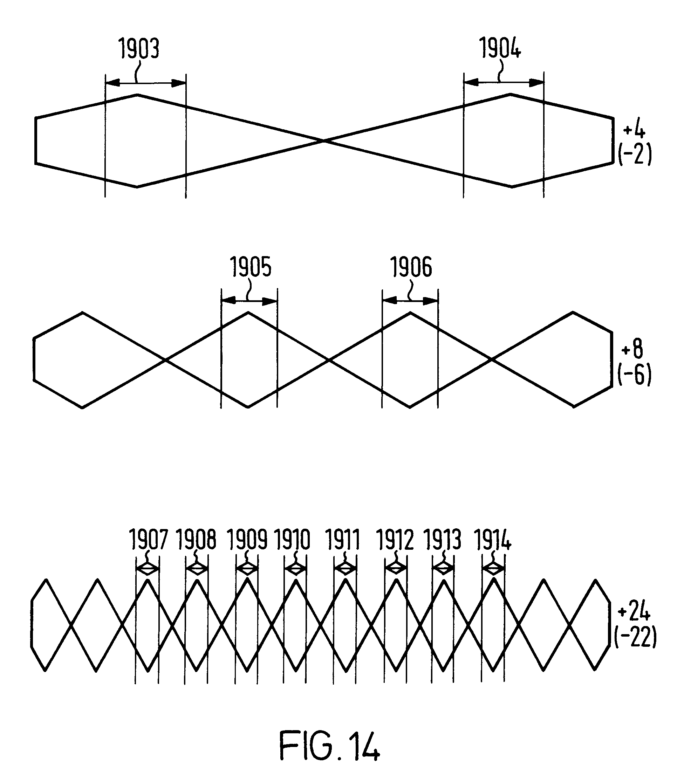

FIGURE 14 shows reproduction signal envelopes of the reproducing heads at the +4(-2), +8(-6) and +24(-22) times speeds. The reproduction signal envelopes at this time are those obtained by the head with 10 µm width the same as the 10 µm width track. In FIGURE 14, the +4(-2) times speed data recording area is provided in the areas 1903 and 1904, the +8(-6) times speed recording area in the areas 1903 and 1904, and the +24(-22) times speed recording area in the areas 1907 through 1914, respectively. Here, the number of tracks equivalent to the pilot signal repetitive period, that is, 4 tracks are made one group.

From FIGURE 13, as the particular speed reproduction data area in the tape format is the four track period, and the speed units of the particular speed reproduction are multiples of four (e.g., +4, +8, +24) in the normal direction and the number subtracted by 2 from multiples of four (e.g., -2 -6, -22) in the reverse direction, there always exists a tracking point at one point in four tracks which is the pilot signal period.

The tracking method at this time will be explained definitely. In the reproduction at the +4(-2) times speed, it becomes possible to make the tracking by detecting a pilot signal by the "+" azimuth head 12 comprising the singular location double azimuth heads shown in FIGURE 5 on the prescribed line dividing a tape in the cross direction and by controlling the signal at that time to bring the potential difference F1 - F2 shown in FIGURE 7 to the downward inclination at the right side and furthermore to 0 V. In the reproduction at the +8(-6) times speed, it is only needed to control the potential difference F1 - F2 to the upward inclination at the right side and to 0 V in the same operation as described above. Further, similarly, in the reproduction at the +24(-22) times speed, it is needed to control the potential difference F1 - F2 to the downward inclination at the right side and 0 V in the center of the particular speed reproduction data areas 1907, 1909, 1911, and 1913 or to the potential difference F1 - F2 shown in FIGURE 7 to the upward inclination at the right side and to 0 V at the center of the particular speed reproduction data areas 1908, 1910, 1912 and 1914.

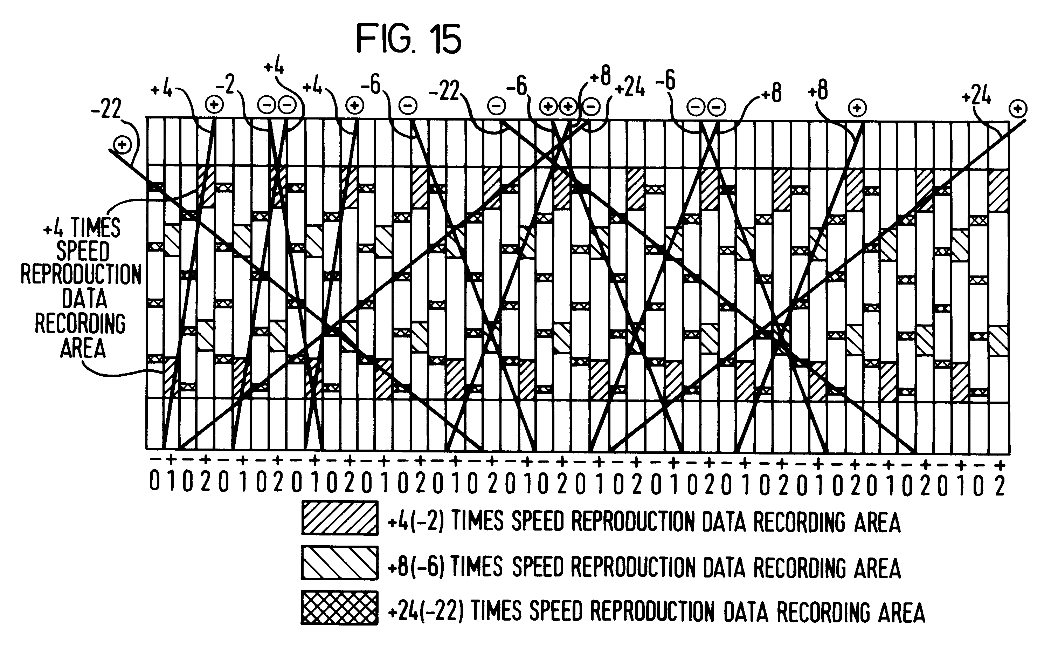

FIGURE 15 shows the scanning loci of the oppositely arranged mono-azimuth heads on the tape format with the +4(-2), +8(-6) and +24(-22) times speeds particular speed reproduction data recording areas added when performing the reproduction at respective reproducing speeds. The scanning loci of the reproducing heads at respective speeds show the scanning loci of the centers of two or the "+" and "-" azimuth heads 4 and 5 comprising the oppositely arranged mono-azimuth heads shown in FIGURE 21.

It is possible to reproduce data according to the tracking technique similar to the reproduction by the double azimuth heads.

Further, particular speed reproduction data are recorded repetitively for the same reason as in the first embodirnent shown in FIGURE 1.

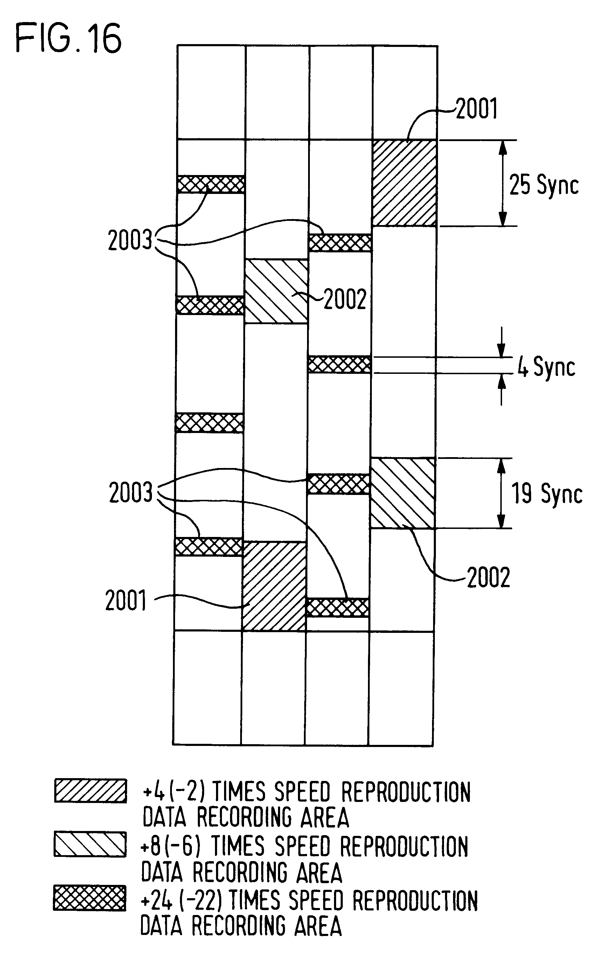

FIGURE 16 shows the detailed tape formats shown in FIGURES 13 and 15.

In FIGURE 16, reference numeral 2001 is the +4(-2) times speed reproduction data recording area and is comprised of two areas provided at the positions symmetrical to the center of the point on the prescribed split line dividing the tape in the cross direction. Reference numeral 2002 is the +8(-6) times speed reproduction data recording area and is comprised of two areas provided at the positions symmetrical to the center of the point on the prescribed split line dividing the tape in the cross direction. Reference numeral 2003 is the +24(-22) times speed reproduction data recording area and is comprised of eight areas provided at the positions symmetrical to the point on the prescribed split line dividing the tape in the cross direction. Each track is provided with a picture image data area and a voice data area. The picture image data area is divided into 135 Syncs. Thus, There are 25 Syncs per particular speed reproduction area for the +4(-2) times speed, 19 Syncs per particular speed reproduction area for the +8(-6) times speed and 4 Syncs per particular speed reproduction area for the +24(-22) times speed.

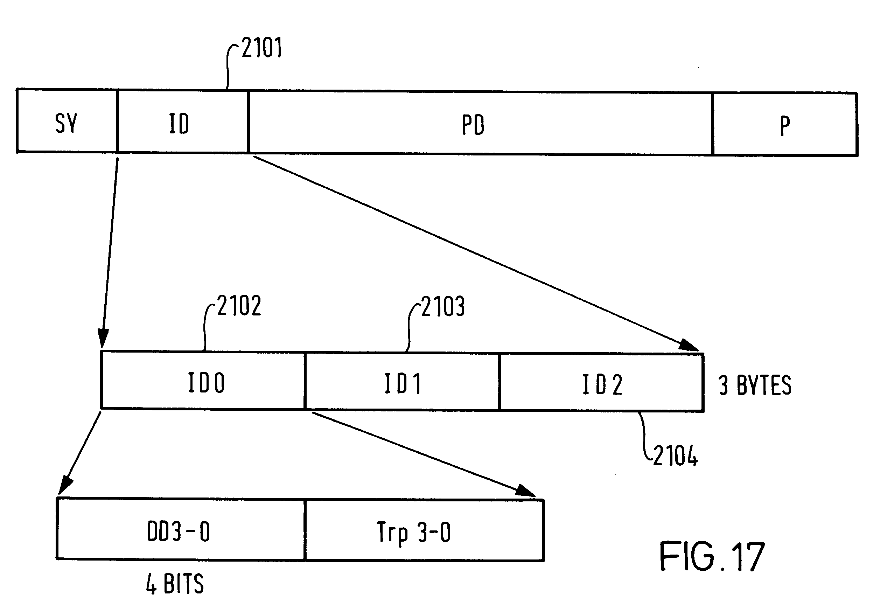

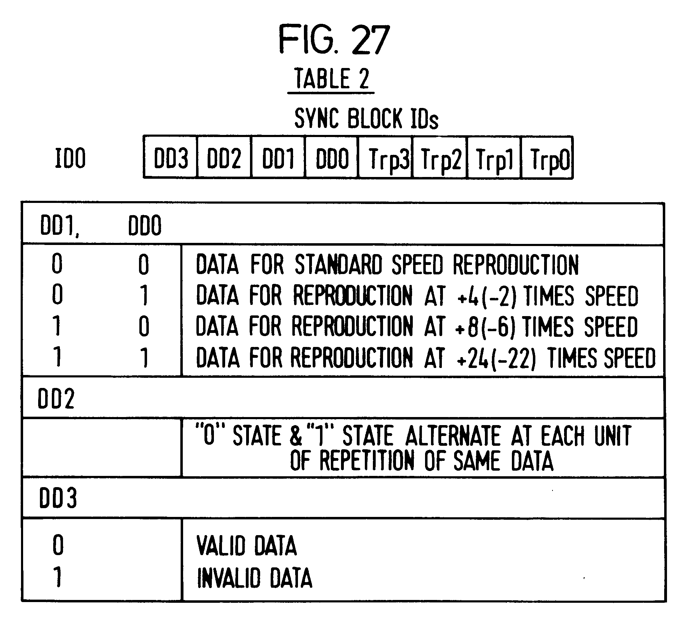

The Sync has the construction the same as that as shown in FIGURE 3 in the first embodiment. Here, the construction of ID will be explained with reference to FIGURES 17 and 27. ID 2101 is comprised of 3 bytes, i.e., ID0 2102, ID1 2103 and ID2 2104. The ID0 2102 is assigned for recording an identification signal. The ID1 2103 is assigned for recording a Sync block. The ID2 2104 is assigned for recording check codes in cyclic codes for error detections to the ID0 - ID2. Here, 1 LSB bits Trp0 - Trp3 of the ID0 2102 are used as a signal indicating a group of tracks. The fifth and sixth bits DD0 and DD1 are signals representing speed units of the particular speed reproduction modes for sync block data, as shown in a table (TABLE 2) of FIGURE 27. The seventh bit DD2 alternates between "0" state and "1" state so as to define a cycle period of the recording data. The eighth bit DD3 takes "0" state when the sync block data is valid for the reproduction, while it takes "1" state when the sync block data is invalid for the reproduction.

Here, the operation of the interface 89 shown in FIGURE 8 when the IDs are used will be explained. In the interface 89, the contents of data input are identified by a signal from a system administrator (not shown) and the DD1 is inserted according to the rule shown in TABLE 2 (see FIGURE 2) corresponding to the speed units of the particular speed reproductions to which data belong. Further, the "0" state and "1" state of the DD2 are alternately inserted according to the rules corresponding to unit of repetition. In the case where a part of or the entirety of the particular speed reproduction data generator 84 and/or the buffers 85A through 87B do not function or not exist, the "1" state of the DD3 is inserted into a data area in which data not generated therefore are to be recorded.

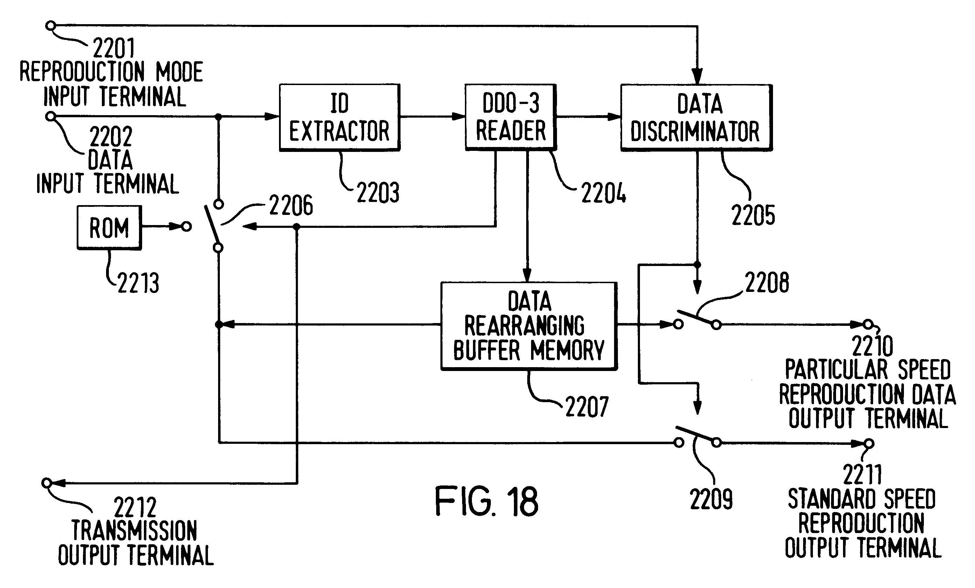

The operation of the reproduction system selector 92 shown in FIGURE 8 when the IDs are used similarly will be explained in reference to FIGURE 18. Reproduced data input through a data input terminal 2202 is extracted its sync block ID by an ID extractor 2203. The extracted sync block ID is then checked its contents by a DD0-3 reader 2204 which detects the contents of the DD0 through DD3 and the contents of the sync block data currently reproduced are checked according to the rules as shown in TABLE 2 (see FIGURE 27). The DD0-3 reader 2204 identifies the DD3 and if the data are judged to be invalid, outputs the output from a ROM 2213 via a switch 2206. The ROM 2213 stores video compression signals to display on a display unit that reproduced data are invalid, as a reproduced picture image. Further, the state that the reproduced data are invalid data is displayed on a display unit of the recording or reproducing apparatus from a system transmission output terminal 2212 via a system administrator (not shown). If the data are judged to be valid, the data from the data input terminal 2202 are applied to a data rearranging buffer memory 2207 via a switch 2206 and directly to a switch 2209. In the data rearranging buffer memory 2207, when the rearrangement of data is required, the data are rearranged according to DD2 that is identified by the DD0-3 reader 2204. The details of the data rearranging operation will be described later. The output of the data rearranging buffer memory 2207 is lead to a switch 2208. The current reproduction mode is led into one of the inputs of a data discriminator 2205 from the system administrator (not shown) via the reproduction mode input terminal 2201. Further, a reproducing speed identified by the DD0-3 reader 2204 and at which data are being reproduced is led into the other input of the data discriminator 2205. In the data discriminator 2205, the switches 2208 and 2209 are short circuited at a time when two inputs agreed with each other and both outputs are led to a particular speed reproduction data output terminal 2210 and a standard speed reproduction output terminal 2211.

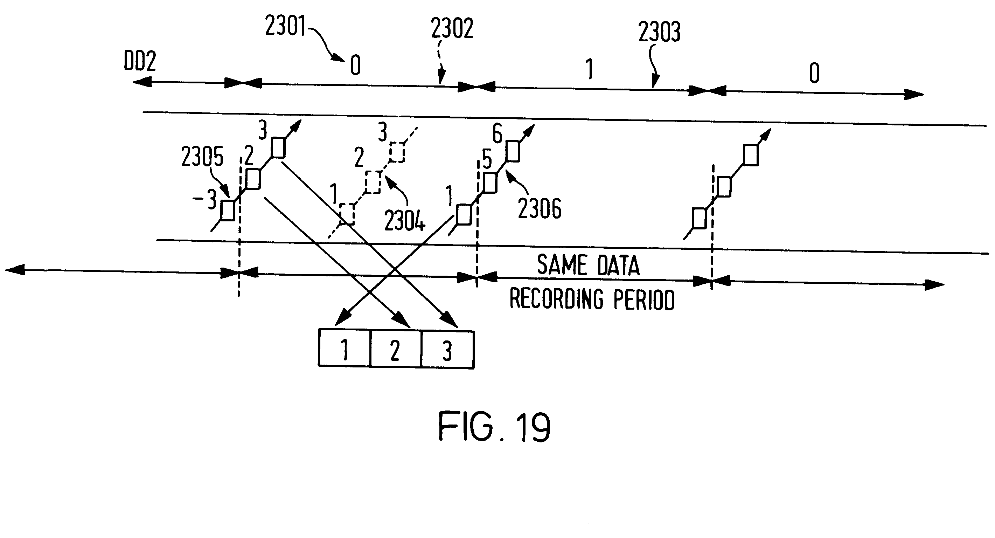

Here, the data rearranging operation described above will be explained by taking the reproduction at a 24 times speed of the format shown in the first embodiment as an example referring to FIGURE 19. Reference numeral 2301 shows the contents of the DD2 and the same repetitive data are recorded in the particular speed reproduction areas for the period shown by the arrows 2302 and 2303. Here, the data stream that is to be taken primarily is in the order of areas 1, 2 and 3 as shown by reference numeral 2304. However, in the actual reproducing operation, the head tracing may be as shown by reference numerals 2305 and 2306 in some cases. In this case, when data are rearranged in the order of tracing, they are in the order of areas 2, 3 and 1. Here, it is clear that all data of a single unit of repetition can be picked up by two traces. As shown in FIGURE 19, the same DD2 rearranges data showing 0 collectively and when three areas are rearranged, data are sequentially read out. At this time, data having the contents of the same DD2 can be rearranged in the order based on the sync block ID of ID1.

In the embodiments described above, the GOP was constructed in unit of frame but it is possible to construct the GOP in unit of field instead of unit of frame according to the MPEG standard, and in this case the I-frame, P-frame and B-frame will become the I-field. P-field and B-field, respectively.

Further, the present invention is not limited to the embodiments described above but, for instance, the construction of GOP, the number of tracks per 1/30 sec., contents of data for the particular speed reproduction, frame period to be updated in the particular speed reproduction, repetitive period of pilot signals and speed of the particular speed reproduction that is decided in connection with them can be set properly. The present invention is also applicable to a digital VTR equipped with rotary heads configured in a pair of the double azimuth heads oppositely arranged on a rotary drum.

As described above, the present invention has such an effect that special reproducing speeds and a period of the particular speed reproduction recording area are decided according to a pilot signal repetitive period for the tracking and furthermore, low speed and high speed reproduction data recording areas are arranged at the center of a tape and data are repetitively recorded according to reproducing speeds, and the tracking can be made by using a pilot signal in the particular speed reproduction and more fine pictures or more wide range updated pictures or more fine and wide range reproduced pictures in the particular speed reproduction at small number times speeds than nigh times speed are obtained by utilizing difference in capacity of recording areas for respective reproducing speeds and therefore, the stabilized and easy to look particular speed reproduction of data according to respective reproducing speeds becomes possible.

As described above, the present invention can provide an extremely preferable method and an apparatus for recording or reproducing digital picture image signals.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A digital picture image signal recording method, in which by sequentially forming tracks on a tape recording medium running at a prescribed speed oblique to its running direction digital picture image signals compressed by a high efficiency encoding technique are recorded using rotary heads and at the same time, and then plural kinds of tracking pilot signals with different frequencies on adjacent tracks are recorded, characterized in that the method comprises the steps of:
deriving data which are essential to decoding the recorded digital picture image signals from the high efficiency encoded digital signals;
successively establishing record areas in unit of a number of tracks equivalent to a cycle period of the tracking pilot signals that can be distinguished by the pilot signal as one group; and
recording data which are essential to the decoding in the recording areas.

2. A digital picture image signal recording method, in which by sequentially forming tracks on a tape recording medium running at a prescribed speed oblique to its running direction digital picture image signals compressed by a high efficiency encoding technique are recorded using rotary heads and at the same time, and then plural kinds of tracking pilot signals with different frequencies on adjacent tracks are recorded, characterized in that the method comprises the steps of:
deriving data which are essential to decoding the recorded digital picture image signals from the high efficiency encoded digital signals;
successively establishing record areas in unit of the maximum number of contiguous tracks that can be distinguished by the pilot signal as one group; and
recording data which are essential to the decoding in the recording areas.

3. A digital picture image signal recording or reproducing method, in which by sequentially forming tracks on a tape recording medium running at a prescribed speed oblique to its running direction digital picture image signals compressed by a high efficiency encoding technique are recorded using the rotary heads and at the same time, and then plural kinds of tracking pilot signals with different frequencies are recorded on adjacent tracks, characterized in that the method comprises the steps of:
deriving data which are essential to decoding the recorded digital picture image signals from the high efficiency encoded digital signals;
successively establishing recording areas in unit of a number of tracks equivalent to a cycle period of the tracking pilot signals that can be distinguished by the pilot signal as one group;
recording data which are essential to the decoding in the recording areas; and
reproducing the digital picture image signals recorded on the tape recording medium by the rotary heads while running the recording medium at a speed of a multiple of that number of tracks by making the number of tracks equivalent to a cycle period of the tracking pilot signals that can be distinguished by the pilot signal as one group.

4. A digital picture image signal recording or reproducing method, in which by sequentially forming tracks on a tape recording medium running at a prescribed speed oblique to its running direction digital picture image signals compressed by a high efficiency encoding technique are recorded using the rotary heads and at the same time, and then plural kinds of tracking pilot signals with different frequencies are recorded on adjacent tracks, characterized in that the method comprises the steps of:
deriving data which are essential to decoding the recorded digital picture image signals from the high efficiency encoded digital signals;
successively establishing recording areas in unit of the maximum number of contiguous tracks that can be distinguished by the pilot signal as one group;
recording data which are essential to the decoding in the recording areas; and
reproducing the digital picture image signals recorded on the tape recording medium by the rotary heads while running the recording medium at a speed of the maximum number of contiguous tracks that can be distinguished by the pilot signal as one group.

5. A digital picture image signal recording or reproducing method as claimed in claim 3, characterized in that:
the reproducing speed of the tape recording medium is set at multiple speeds comprising a submultiple or a multiple of the number of unit tracks;
essential data to decoding the recorded digital picture image signals are derived at every reproducing speed; and
at each track that is traced by the rotary heads at every reproducing speed, essential data to decoding are repetitively recorded in unit of tracks on the tracks between the tracks that are traced.

6. A digital picture image signal recording or reproducing method as claimed in claim 4, characterized in that:
the reproducing speed of the tape recording medium is set at a speed as defined by an equation; n = (k/2) × r, wherein n is a speed unit of a particular reproduction speed, k is a number of tracks in a prescribed cycle period and r is a number of cycle period;
essential data to decoding the recorded digital picture image signals are derived at every reproducing speed; and
at each track that is traced by the rotary heads at every reproducing speed, essential data to decoding are repetitively recorded in unit of tracks on the tracks between the tracks that are traced.

7. A digital picture image signal recording or reproducing method as claimed in claim 3, characterized in that:
the reproducing speed of the tape recording medium is set at multiple speeds comprising a submultiple or a multiple of the number of unit tracks;
essential data to decoding the recorded digital picture image signals are derived at every reproducing speed; and
the essential data are recorded in different recording areas of the track at every reproducing speed and the recording areas are arranged symmetrically with respect to the longitudinal center line of the recording medium in the state that the oblique direction of the tracks with respect to the longitudinal center line of the recording medium is mapped to the perpendicular direction with respect to the longitudinal center line of the recording medium.

8. A digital picture image signal recording or reproducing method as claimed in claim 4, characterized in that:
the reproducing speed of the tape recording medium is set at multiple speeds comprising a submultiple or a multiple of the number of unit tracks;
essential data to decoding the recorded digital picture image signals are derived at every reproducing speed; and
the essential data are recorded in different recording areas of the track at every reproducing speed and the recording areas are arranged symmetrically with respect to the longitudinal center line of the recording medium in the state that the oblique direction of the tracks with respect to the longitudinal center line of the recording medium is mapped to the perpendicular direction with respect to the longitudinal center line of the recording medium.

9. A digital picture image signal recording or reproducing apparatus which is capable of recording digital picture image signals compressed by a high efficiency encoding technique on a tape recording medium running at a prescribed speed by forming tracks sequentially oblique to its traveling direction using rotary heads, recording plural kinds of tracking pilot signals with different frequencies which are cycling in a prescribed track period on adjacent tracks and reproducing digital picture image signals while running the tape recording medium at multiple prescribed speeds faster than the recording speed, characterized in that the apparatus is provided with:
data generating means for generating and deriving data from the digital picture image signals, that become essential to decoding the digital picture image signals at every reproducing speed;
first buffer means comprising multiple buffers for temporarily storing derived data;
first data rate conversion means for converting a data rate of the digital picture image signals into a prescribed more faster data rate;
recording system selecting means for selectively arranging the data from the first data rate conversion means and multiple data from the first buffer means time series so as to form and output a data train corresponding to a prescribed tape format;
recording means for recording the data train from the recording system selecting means and the multiple pilot signals using the rotary heads;
reproduction means for reproducing the data train and the pilot signals using the rotary heads while running the tape recording medium at a speed responsive to a control signal so as to control the tracking based on the pilot signals;
reproduction system selecting means for selecting to output data which are essential to decoding operations from the reproduction means or standard speed reproduction data in response to a control signal indicating whether the reproduction is the particular speed reproduction;
second buffer means for sequentially outputing data that become essential to decoding the data output from the reproduction system selecting means in the reproduction at a two times speed to a decoding circuit after holding them for a prescribed period; and
second data rate conversion means for converting to output standard speed reproduction data that are output from the reproduction system selecting means in the standard speed reproduction to the original data rate.

10. A digital picture image signal recording method for recording digital picture image signals compressed by a high efficiency encoding technique on a tape recording medium running at a prescribed speed using rotary heads by sequentially forming tracks which are in mutually different azimuths to adjacent tracks oblique to the running direction, characterized in that the method comprises the steps of:
deriving data that are essential to decoding digital picture image signals from the high efficiency encoded digital picture image signals; and
recording the data for the particular speed reproduction mode operation while running the tape recording medium at a speed different from the recording speed on the positions of the tape recording medium that is traced by the rotary heads by performing the independent encoding in variable length separately for each of the azimuth channels so that the recorded data can be reproduced by either of the double azimuth heads and oppositely arranged mono-azimuth heads.

11. A digital picture image signal recording method as claimed in claim 10, characterized in that:
the data are divided into two parts on the picture and recorded on each track and the recorded azimuth can be changed at each picture updating period in the particular speed reproduction.

12. A digital picture image signal recording method as claimed in claim 10, characterized in that:
the data are divided into two parts on the picture and are further divided into N parts in each of the halved parts and recorded on each track so that the picture is updated for each N divided data and the recording azimuth can be changed whenever the picture image is updated.

13. A digital picture image signal recording or reproducing apparatus which is capable of recording digital picture image signals compressed by a high efficiency encoding technique on a tape recording medium running at a prescribed speed by forming tracks, which are mutually in different azimuths with adjacent tracks, sequentially oblique to its running direction using rotary heads, and recording plural kinds of tracking pilot signals with different frequencies on adjacent tracks which are cycling in a prescribed track period and reproducing digital picture image signals while running the tape recording medium at multiple prescribed speeds faster than the recording speed, characterized in that the apparatus is provided with:
data generating means for generating to derive data which are essential to decoding signals from the digital picture image signals so that they can be reproduced by either of double azimuth heads and oppositely arranged mono-azimuth heads;
first buffer means comprising multiple buffers for temporarily storing derived data;
first data rate conversion means for converting the digital picture image signal data rate into a more faster prescribed data rate;
recording system selecting means for selectively arranging data from the first data rate conversion means and multiple data from the first buffer means time series so as to form and output a data train corresponding to a prescribed tape format;
recording means for recording the data train from the recording system selecting means and multiple pilot signals using the rotary heads;
reproduction means for reproducing the data train and pilot signals by the rotary heads while running the tape recording medium at a speed responding to control signal so as to perform the tracking control based on the pilot signals;
reproduction system selecting means for selecting to output data which are essential to decoding the digital picture image signals or ordinary reproduced data from the reproduction means in response to a control signal showing whether the reproduction is at a two times speed;
second buffer means for sequentially outputing data which are essential to decoding the digital picture image signals output from the reproduction system selecting means in the reproduction at a two times speed after holding them for a prescribed period; and
second data rate conversion means for converting to output the data rate of ordinary reproduced data that are output from the reproduction system selecting means in the standard speed reproduction to the original data rate.

14. A digital picture image signal recording or reproducing method as claimed in claim 3, characterized in that the method comprises the steps of:
setting the running speed of the tape recording medium at the reproduction at multiple speeds comprising submultiples or multiples of the number of unit tracks; and
establishing multiple data recording areas, each of which is independently provided for each speed, within the number of unit tracks and arranging these recording areas on positions symmetrical about points on the longitudinal axial line of the tape recording medium for each speed in the state that the oblique direction of the tracks with respect to the longitudinal center line of the recording medium is mapped to the perpendicular direction with respect to the longitudinal center line of the recording medium.

15. A digital picture image signal recording or reproducing method as claimed in claim 4, characterized in that the method comprises the steps of:
setting the running speed of the tape recording medium at the reproduction at multiple speeds comprising submultiples or multiples of the number of unit tracks; and
establishing multiple data recording areas, each of which is independently provided for each speed, within the number of unit tracks and arranging these recording areas on positions symmetrical about points on the longitudinal axial line of the tape recording medium for each speed in the state that the oblique direction of the tracks with respect to the longitudinal center line of the recording medium is mapped to the perpendicular direction with respect to the longitudinal center line of the recording medium.

16. A digital picture image signal recording or reproducing method as claimed in claim 3, characterized in that:
all the tracks described above are formed by multiple rotary heads in different azimuths, and further the data recording areas are formed on tracks in the same azimuth for each reproducing speed, respectively.

17. A digital picture image signal recording or reproducing method as claimed in claim 4, characterized in that:
all the tracks described above are formed by multiple rotary heads in different azimuths, and further the data recording areas are formed on tracks in the same azimuth for each reproducing speed, respectively.

18. A digital picture image signal recording or reproducing apparatus as claimed in claim 9, characterized in that the apparatus is further provided with:
means for adding a signal to data which are essential to the decoding to direct a running speed unit of the tape recording medium at a particular reproducing operation the recorded data.

19. A digital picture image signal recording or reproducing apparatus as claimed in claim 9, characterized in that the apparatus is further provided with:
means for adding a signal to data which are essential to the decoding to indicate whether the data are effective signals for reproduction.

20. A digital picture image signal recording or reproducing method as claimed in claim 5, characterized in that:
data for multiple reproducing speeds are recorded with a track range indication signal showing unit of the repetitive recording added.

21. A digital picture image signal recording or reproducing method as claimed in claim 6, characterized in that:
data for multiple reproducing speeds are recorded with a track range indication signal showing unit of the repetitive recording added.

22. A digital picture image signal recording or reproducing apparatus as claimed in claim 19, characterized in that the apparatus is further provided with:
means for detecting to discriminate a signal from the data recorded on and reproduced from the tape recording medium indicating whether the data are effective signals; and
means for displaying that invalid data were recorded if they were judged to be invalid as a result of the discrimination.

23. A digital picture image signal recording or reproducing method as claimed in claim 20, characterized in that the method further comprises the steps of:
detecting a signal showing unit of the repetitive recording from the reproduced data;
judging based on the detected signal that one trace was repetitively performed by the rotary heads consecutively for each unit of tracks by more than the numbers that are decided by the number of times determined by spaces of the tracks and the reproduced data are rearranged in the same order as in the recording.

24. A digital picture image signal recording or reproducing method as claimed in claim 21, characterized in that the method further comprises the steps of:
detecting a signal showing unit of the repetitive recording from the reproduced data;
judging based on the detected signal that one trace was repetitively performed by the rotary heads consecutively for each unit of tracks by more than the numbers that are decided by the number of times determined by spaces of the tracks and the reproduced data are rearranged in the same order as in the recording.

25. A digital picture image signal recording or reproducing method as claimed in claim 3, characterized in that the method further comprises the steps of:
setting the reproduction speed of the tape recording medium at multiple speeds comprising a submultiple or a multiple of unit of tracks;
deriving the essential data to decoding at each reproducing speed; and
recording the essential data in the different recording areas of the tracks at each reproducing speed and therefore, amount of information differs for each reproducing speed and the lower a reproducing speed, the more amount of information.

26. A digital picture image signal recording or reproducing method as claimed in claim 4, characterized in that the method further comprises the steps of:
setting the reproduction speed of the tape recording medium at multiple speeds comprising a submultiple or a multiple of unit of tracks;
deriving the essential data to decoding at each reproducing speed; and
recording the essential data in the different recording areas of the tracks at each reproducing speed and therefore, amount of information differs for each reproducing speed and the lower a reproducing speed, the more amount of information.

27. A digital picture image signal recording or reproducing method which records or reproduces digital picture image signals compressed by high efficiency encoding technique on or from a tape recording medium running at a prescribed speed using rotary heads by sequentially forming tracks on the recording medium oblique to its running direction, characterized in that the method further comprises the steps of:
establishing prescribed recording areas on the tracks from which recorded signals can be reproduced by the rotary heads when reproducing them while running the tape recording medium at a speed faster than the recording speed;
deriving data essential to decoding the high efficiency encoded digital picture image signals, which are recorded in the recording areas together with data for identifying the data; and
reproducing the data to controlling the reproduction operation based on the identified data.

28. A digital picture image signal recording or reproducing method as claimed in claim 27, characterized in that:
the identified data is a data indicating that the data essential to decoding are effective data for reproduction.

29. A digital picture image signal recording or reproducing method as claimed in claim 27, characterized in that:
the identification data is a data indicating a two times speed at reproduction.

30. A digital picture image signal recording or reproducing method as claimed in claim 27, characterized in that:
the identification data is a data specifying a track on which the data is recorded.
